# EUROPEAN PATENT APPLICATION

(11) **EP 4 507 357 A1**
(43) Date of publication of application: **12.02.2025**
(21) Application number: 23802546.4
(22) Date of filing: 04.04.2023
(51) Int. Cl.: H04W 16/10

(54) **RESOURCE STATE INTERACTION METHOD AND COMMUNICATION APPARATUS**

(30) Priority: 07.05.2022 CN 202210493347
(71) Applicant: Huawei Technologies Co., Ltd., Shenzhen, Guangdong 518129 (CN)
(72) Inventor: ZENG, Yu, Shenzhen, Guangdong 518129 (CN); OLOFSSON, Henrik, Shenzhen, Guangdong 518129 (CN)
(74) Representative: Goddar, Heinz J.
(86) International application number: PCT/CN2023/086073
(87) International publication number: WO 2023/216770

(57) **Abstract**

Embodiments of this application provide a resource status exchange method and a communication apparatus. The resource status exchange method includes: A first network device sends a first request message to a second network device, and correspondingly, the second network device receives the first request message, where the first request message includes first indication information, the first indication information indicates a priority of at least one resource parameter, and the first request message is used to request to feed back a measurement value of the at least one resource parameter. The second network device determines a first resource parameter from the at least one resource parameter based on the priority; and the second network device sends a first response message to the first network device, and correspondingly, the first network device receives the first response message, where the first response message includes a measurement value of the first resource parameter in the at least one resource parameter. The method can improve resource status exchange efficiency.

## Description

This application claims priority to Chinese Patent Application No. 202210493347.9, filed with the China National Intellectual Property Administration on May 7, 2022 and entitled "RESOURCE STATUS EXCHANGE METHOD AND COMMUNICATION APPARATUS", which is incorporated herein by reference in its entirety.

### TECHNICAL FIELD

This application relates to the field of communication technologies, and in particular, to a resource status exchange method and a communication apparatus.

### BACKGROUND

In a communication system, resource usage may be exchanged between different network devices, to optimize a network mobility parameter configuration. For example, a first network device may send a resource status request to a second network device, to perform resource status exchange. The resource status request includes a resource parameter concerned by the first network device. For example, the resource parameter may include a transport network layer resource, hardware usage, radio load, and an overall resource status.

Generally, after receiving the resource status request, the second network device measures the resource parameter included in the resource status request, and periodically feeds back a resource status report to the first network device. When the second network device cannot feed back feedback results of all resource parameters, the second network device sends a resource status failure message to the first network device, to end the resource status exchange. In the foregoing method, efficiency of the resource status exchange between the first network device and the second network device is low.

### SUMMARY

Embodiments of this application disclose a resource status exchange method and a communication apparatus, to improve resource status exchange efficiency.

According to a first aspect, an embodiment of this application provides a resource status exchange method, including:

A first network device sends a first request message to a second network device, where the first request message includes first indication information, the first indication information indicates a priority of at least one resource parameter, and the first request message is used to request to feed back a measurement value of the at least one resource parameter; and the first network device receives a first response message sent by the second network device, where the first response message includes a measurement value of a first resource parameter in the at least one resource parameter.

In this embodiment of this application, the first request message includes the first indication information indicating the at least one resource parameter, to indicate the second network device to measure the at least one resource parameter in descending order of priorities. It may be understood that a resource parameter with a higher priority in the at least one resource parameter is more important. The first resource parameter is a measured resource parameter in the at least one resource parameter. When the second network device cannot measure all resource parameters in the at least one resource parameter, for example, when an available resource of the second network device is limited, the second network device preferentially measures a high-priority resource parameter, and feeds back a measurement value of the measured resource parameter in the first response message, to ensure that a measurement value of an important resource parameter can be fed back as much as possible in the first response message, so as to improve efficiency of resource status exchange between the first network device and the second network device, and also improve flexibility of the resource status exchange between the first network device and the second network device.

According to a second aspect, an embodiment of this application provides a resource status exchange method, including:

A second network device receives a first request message sent by a first network device, where the first request message includes first indication information, and the first indication information includes a priority of at least one resource parameter; the second network device determines a first resource parameter from the at least one resource parameter based on the priority; and the second network device sends a first response message to the first network device, where the first response message includes a measurement value of the first resource parameter.

In this embodiment of this application, the first request message may be a resource status request. The first network device sends the first request message to the second network device to perform resource status exchange, to request the second network device to feed back a measurement value of the at least one resource parameter. The first resource parameter is a resource parameter that has been measured by the second network device and that is in the at least one resource parameter. The first indication information includes the priority of the at least one resource parameter, and the second network device measures and feeds back the measurement value of the at least one resource parameter in descending order of priorities. It may be understood that the first resource parameter may be a high-priority resource parameter in the at least one resource parameter. The second network device preferentially measures the high-priority resource parameter in the at least one resource parameter, to determine the first resource parameter, and feeds back the measurement value of the first resource parameter in the first response message. Therefore, it is ensured that the first response message includes the measurement value of the high-priority resource parameter in the at least one resource parameter, and efficiency of the resource status exchange between the first network device and the second network device is improved.

With reference to the second aspect, in a possible implementation, that the second network device determines a first resource parameter from the at least one resource parameter based on the priority includes: The second network device determines the first resource parameter from the at least one resource parameter based on the priority and an available resource of the second network device.

In this embodiment of this application, when the available resource of the second network device allows, the high-priority resource parameter is preferentially measured, to determine the first resource parameter, so that the resource of the second network device can be appropriately used. Especially when the available resource of the second network device is limited, the limited resource can be appropriately used.

With reference to the first aspect or the second aspect, in a possible implementation, the first response message further includes second indication information, and the second indication information indicates a resource parameter that has not been fed back or a resource parameter that has been fed back in the at least one resource parameter.

In this embodiment of this application, the second indication information indicates the resource parameter that has been fed back or the resource parameter that has not been fed back in the at least one resource parameter, so that the first network device can quickly obtain, based on the second indication information, the resource parameter that has been fed back or the resource parameter that has not been fed back, for the first network device to subsequently perform an operation based on the resource parameter that has been fed back or the resource parameter that has not been fed back.

With reference to the first aspect or the second aspect, in a possible implementation, when the second indication information indicates the resource parameter that has not been fed back, the first response message further includes first time information, and the first time information indicates an estimated feedback recovery time of the resource parameter that has not been fed back.

In this embodiment of this application, the first response message may indicate, by using the first time information, the estimated feedback recovery time of the resource parameter that has not been fed back, so that the first network device requests again, after the estimated feedback recovery time, to feed back a measurement value of the resource parameter that has not been fed back. This reduces a possibility that the first network device fails to request again to feed back the measurement value of the resource parameter that has not been fed back. Therefore, interaction between the first network device and the second network device is more flexible.

With reference to the first aspect or the second aspect, in a possible implementation, when the second indication information indicates the resource parameter that has not been fed back, the second indication information further indicates a cell, a beam, or a slice corresponding to the resource parameter that has not been fed back; or when the second indication information indicates the resource parameter that has been fed back, the second indication information further indicates a cell, a beam, or a slice corresponding to the resource parameter that has been fed back.

With reference to the first aspect or the second aspect, in a possible implementation, the first response message further includes second time information, and the second time information indicates a time interval between a moment at which the first network device receives the first response message and a moment at which the first network device sends a second request message.

In this embodiment of this application, the second request message is a resource status request message resent by the first network device, and the second network device may indicate, by using the second time information, a time point at which the first network device resends the resource status request message. For example, the second network device may indicate, based on a resource usage change status or a load change status of the second network device, the time point at which the first network device resends the resource status request. This avoids a case in which a resource status exchange failure is caused because the available resource of the second network device is insufficient or the second network device is overloaded when the first network device resends the resource status request, so that the resource status exchange between the first network device and the second network device is more flexible.

With reference to the first aspect or the second aspect, in a possible implementation, the first response message further includes third indication information, and the third indication information indicates a resource parameter that is in the first resource parameter and that is estimated to fail to be normally fed back subsequently, where the resource parameter that is estimated to fail to be normally fed back subsequently includes a resource parameter that has a feedback risk and/or a resource parameter that cannot be continuously fed back.

In this embodiment of this application, the first response message may include the third indication information indicating the resource parameter that is in the first resource parameter and that is estimated to fail to be normally fed back subsequently, so that the first network device can change, based on the third indication information, a resource parameter whose measurement value needs to be fed back. In this way, the resource status exchange between the first network device and the second network device is more flexible.

With reference to the first aspect or the second aspect, in a possible implementation, the first response message further includes third time information, and the third time information indicates a feedback failure time of the resource parameter that is estimated to fail to be normally fed back subsequently.

In this embodiment of this application, the first response message may include the feedback failure time of the resource parameter that is estimated to fail to be normally fed back subsequently, and may indicate the first network device to request again, after the feedback failure time, to feed back the resource parameter that is estimated to fail to be normally fed back subsequently, to improve the flexibility of the resource status exchange.

With reference to the first aspect or the second aspect, in a possible implementation, the at least one resource parameter includes at least one of an air interface resource utilization rate, a transport network layer resource utilization rate, an overall available resource utilization rate, a quantity of active user equipments UEs, and a quantity of radio resource control RRC connections.

With reference to the first aspect or the second aspect, in a possible implementation, the first request message further includes a first feedback periodicity, where the first feedback periodicity indicates a feedback periodicity for feeding back the measurement value of the at least one resource parameter by the second network device; and the first response message further includes a second feedback periodicity, where the second feedback periodicity includes a feedback periodicity suggested by the second network device and/or a feedback periodicity acceptable to the second network device, and the feedback periodicity suggested by the second network device and/or the feedback periodicity acceptable to the second network device are/is determined based on the first feedback periodicity.

In this embodiment of this application, the first response message may include the second feedback periodicity, which indicates the feedback periodicity acceptable to the second network device and/or the feedback periodicity suggested by the second network device, so that the first network device can adjust, based on the second feedback periodicity, the feedback periodicity for feeding back the measurement value of the at least one resource parameter. Therefore, the interaction between the first network device and the second network device is more flexible.

With reference to the first aspect, in a possible implementation, the first request message further includes a first feedback periodicity, where the first feedback periodicity indicates a feedback periodicity for feeding back the measurement value of the at least one resource parameter by the second network device; and the first response message further includes a third feedback periodicity, where the third feedback periodicity is determined by the second network device based on the first feedback periodicity, and the third feedback periodicity indicates a feedback periodicity expected by the second network device for feeding back the measurement value of the at least one resource parameter.

In this embodiment of this application, when the second network device needs to change the feedback periodicity for feeding back the measurement value of the at least one resource parameter, the second network device may include the third feedback periodicity in the first response message, to indicate the first network device to change the feedback periodicity for feeding back the measurement value of the at least one resource parameter to the third feedback periodicity. For example, when a load status or a resource usage status of the second network device changes, the second network device may indicate, by using the third feedback periodicity, the first network device to change the feedback periodicity for feeding back the at least one resource parameter, so that a resource of the second network device is appropriately used, and flexibility of interaction between the first network device and the second network device is improved.

With reference to the first aspect, in a possible implementation, the method further includes: The first network device sends a confirmation message to the second network device after receiving the first response information, where the confirmation message indicates that the first network device accepts the third feedback periodicity, or indicates that the first network device rejects the third feedback periodicity.

With reference to the second aspect, in a possible implementation, the first request message further includes a first feedback periodicity, where the first feedback periodicity indicates a feedback periodicity for feeding back the measurement value of the at least one resource parameter by the second network device; and the first response message further includes a third feedback periodicity, where the third feedback periodicity is determined by the second network device based on the first feedback periodicity, and the third feedback periodicity indicates a feedback periodicity expected by the second network device for feeding back the measurement value of the at least one resource parameter.

In this embodiment of this application, when the second network device needs to change the feedback periodicity for feeding back the measurement value of the at least one resource parameter, the second network device may include the third feedback periodicity in the first response message, to indicate the first network device to change the feedback periodicity for feeding back the measurement value of the at least one resource parameter to the third feedback periodicity. For example, when a load status or a resource usage status of the second network device changes, the second network device may indicate, by using the third feedback periodicity, the first network device to change the feedback periodicity for feeding back the at least one resource parameter, so that a resource of the second network device is appropriately used, and flexibility of interaction between the first network device and the second network device is improved.

With reference to the second aspect, in a possible implementation, the method further includes: After sending the first response information to the first network device, the second network device receives the confirmation message sent by the first network device, where the confirmation message indicates that the first network device accepts the third feedback periodicity, or indicates that the first network device rejects the third feedback periodicity.

According to a third aspect, an embodiment of this application provides a communication apparatus, configured to perform the method in any one of the first aspect or the possible implementations of the first aspect. The first communication apparatus includes a unit configured to perform the method in any one of the first aspect or the possible implementations of the first aspect.

According to a fourth aspect, an embodiment of this application provides a communication apparatus, configured to perform the method in any one of the second aspect or the possible implementations of the second aspect. The second communication apparatus includes a unit configured to perform the method in any one of the second aspect or the possible implementations of the second aspect.

According to a fifth aspect, an embodiment of this application provides a communication apparatus. The communication apparatus includes a processor, configured to perform the method in any one of the first aspect or the possible implementations of the first aspect. Alternatively, the processor is configured to execute a program stored in a memory. When the program is executed, the method in any one of the first aspect or the possible implementations of the first aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a sixth aspect, an embodiment of this application provides a communication apparatus. The communication apparatus includes a processor, configured to perform the method in any one of the second aspect or the possible implementations of the second aspect. Alternatively, the processor is configured to execute a program stored in a memory. When the program is executed, the method in any one of the second aspect or the possible implementations of the second aspect is performed.

In a possible implementation, the memory is located outside the communication apparatus.

In a possible implementation, the memory is located inside the communication apparatus.

In this embodiment of this application, the processor and the memory may alternatively be integrated into one device. In other words, the processor and the memory may alternatively be integrated together.

In a possible implementation, the communication apparatus further includes a transceiver. The transceiver is configured to receive a signal or send a signal.

According to a seventh aspect, an embodiment of this application provides a communication apparatus. The communication apparatus includes a logic circuit and an interface, the logic circuit is coupled to the interface, and the interface is configured to: output a first request message and input a first response message.

It may be understood that for description of the first request message and the first response message, refer to the method in any one of the first aspect or the possible implementations of the first aspect. Details are not described herein again.

According to an eighth aspect, an embodiment of this application provides a communication apparatus. The communication apparatus includes a logic circuit and an interface, the logic circuit is coupled to the interface, the interface is configured to: input a first request message and output a first response message, and the logic circuit is configured to determine a first resource parameter.

It may be understood that for description of the first request message, the first response message, and the first resource parameter, refer to the method in any one of the second aspect or the possible implementations of the second aspect. Details are not described herein again.

According to a ninth aspect, an embodiment of this application provides a computer-readable storage medium. The computer-readable storage medium is configured to store a computer program. When the computer program is run on a computer, the method in any one of the first aspect or the possible implementations of the first aspect is performed.

According to a tenth aspect, an embodiment of this application provides a computer-readable storage medium. The computer-readable storage medium is configured to store a computer program. When the computer program is run on a computer, the method in any one of the second aspect or the possible implementations of the second aspect is performed.

According to an eleventh aspect, an embodiment of this application provides a computer program product. The computer program product includes a computer program or computer code. When the computer program product runs on a computer, the method in any one of the first aspect or the possible implementations of the first aspect is performed.

According to a twelfth aspect, an embodiment of this application provides a computer program product. The computer program product includes a computer program or computer code. When the computer program product runs on a computer, the method in any one of the second aspect or the possible implementations of the second aspect is performed.

According to a thirteenth aspect, an embodiment of this application provides a computer program. When the computer program is run on a computer, the method in any one of the first aspect or the possible implementations of the first aspect is performed.

According to a fourteenth aspect, an embodiment of this application provides a computer program. When the computer program is run on a computer, the method in any one of the second aspect or the possible implementations of the second aspect is performed.

According to a fifteenth aspect, an embodiment of this application provides a wireless communication system. The wireless communication system includes a first communication apparatus and a second communication apparatus, the first communication apparatus is configured to perform the method in any one of the first aspect or the possible implementations of the first aspect, and the second communication apparatus is configured to perform the method in any one of the second aspect or the possible implementations of the second aspect.

### BRIEF DESCRIPTION OF DRAWINGS

The following describes accompanying drawings used in embodiments of this application.
FIG. 1 is a diagram of a protocol stack of a network device according to an embodiment of this application;
FIG. 2 is a diagram of a structure of a communication system according to an embodiment of this application;
FIG. 3 is an interaction diagram of a mobility parameter change according to an embodiment of this application;
FIG. 4 is an interaction flowchart of resource status exchange according to an embodiment of this application;
FIG. 5 is an interaction diagram of a resource status exchange method according to an embodiment of this application;
FIG. 6 is an interaction diagram of another resource status exchange method according to an embodiment of this application;
FIG. 7 is a diagram of a structure of a communication apparatus according to an embodiment of this application;
FIG. 8 is a diagram of a structure of another communication apparatus according to an embodiment of this application; and
FIG. 9 is a diagram of a structure of still another communication apparatus according to an embodiment of this application.

### DESCRIPTION OF EMBODIMENTS

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that embodiments described herein may be combined with another embodiment.

In this application, "at least one (item)" means one or more, "a plurality of" means two or more, and "at least two (items)" means two or three or more. "And/or" is used to describe an association relationship between associated objects, and indicates that three relationships may exist. For example, "A and/or B" may indicate: only A exists, only B exists, and both A and B exist. A and B may be singular or plural. The character "/" generally represents an "or" relationship between the associated objects. "At least one (item) of the following" or a similar expression thereof means any combination of these items. For example, at least one (item) of a, b, or c may indicate: a, b, c, "a and b", "a and c", "b and c", or "a and b and c".

The following describes in detail a communication system and apparatuses in this application.

The technical solutions in embodiments of this application can be applied to various communication systems, for example, a code division multiple access (code division multiple access, CDMA) system, a wideband code division multiple access (wideband code division multiple access, WCDMA) system, a long term evolution (long term evolution, LTE) system, a universal mobile telecommunications system (universal mobile telecommunications system, UMTS), a 5th generation (5th generation, 5G) system or a new radio (new radio, NR) system, and a future evolved wireless communication system.

A terminal device in embodiments of this application may be a wireless terminal or a wired terminal. The wireless terminal may be a device that provides a user with a voice and/or data connectivity, a handheld device with a wireless connection function, or another processing device connected to a radio modem. The wireless terminal may communicate with one or more core networks through a radio access network (Radio Access Network, RAN). The wireless terminal may be a mobile terminal, for example, a mobile phone (or referred to as a "cellular" phone) or a computer having a mobile terminal, for example, may be a portable, pocket-sized, handheld, computer built-in, or in-vehicle mobile apparatus, which exchanges a voice and/or data with the radio access network. For example, the wireless terminal may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The wireless terminal may also be referred to as a system, a subscriber unit (subscriber unit, SU), a subscriber station (subscriber station, SS), a mobile station (mobile station, MB), a mobile (Mobile), a remote station (remote station, RS), an access point (access point, AP), a remote terminal (remote terminal, RT), an access terminal (access terminal, AT), a user terminal (user terminal, UT), a user agent (user agent, UA), a terminal device (user device, UD), or a user equipment (user equipment, UE). This is not limited in embodiments of this application.

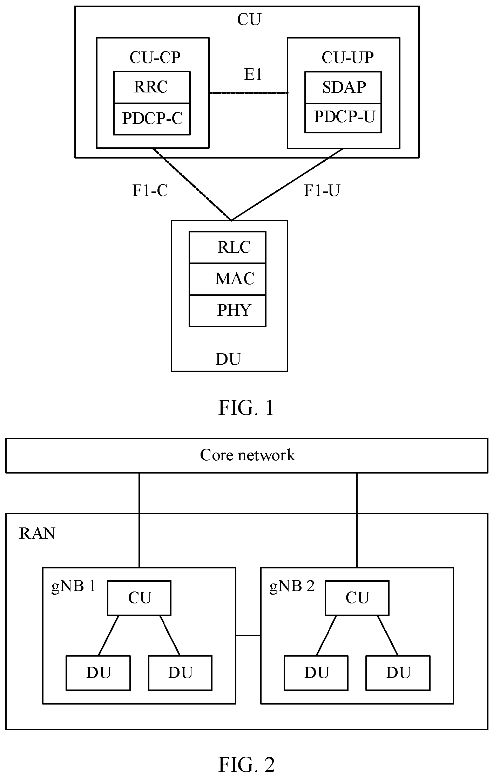

A network device in embodiments of this application is also referred to as a radio access network (radio access network, RAN) device, is a device that connects a terminal device to a wireless network, and may be specifically a base station. There may be various forms of base stations, for example, a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile network (public land mobile network, PLMN), or the like. This is not limited herein. In a possible manner, an access network device may be a base station (for example, a gNB) that uses an architecture in which a central unit (central unit, CU) and a distributed unit (distributed unit, DU) are separated. FIG. 1 is a diagram of a protocol stack of a network device according to an embodiment of this application. The RAN device may be connected to a core network device (for example, a core network in LTE or a core network in 5G). It may be understood that the base station is divided into the CU and the DU from the perspective of a logical function. The CU and the DU may be physically separated or deployed together. A plurality of DUs may share one CU. One DU may alternatively be connected to a plurality of CUs (not shown in the figure). The CU and the DU may be connected through an interface, for example, an F1 interface. The CU and the DU may be obtained through division based on protocol layers of a wireless network. For example, functions of a radio resource control (radio resource control, RRC) layer, a service data adaptation protocol (service data adaptation protocol, SDAP) layer, and a packet data convergence protocol (packet data convergence protocol, PDCP) layer are disposed on the CU, and functions of a radio link control (radio link control, RLC) layer, a media access control (media access control, MAC) layer, and a physical (physical, PHY) layer are disposed on the DU. It may be understood that, division into processing functions of the CU and the DU based on the protocol layers is merely an example, and there may be other division. For example, the CU or the DU may have functions of more protocol layers through division. For example, the CU or the DU may alternatively have some processing functions of the protocol layers through division. In a design, some functions of the RLC layer and functions of protocol layers above the RLC layer are disposed on the CU, and a remaining function of the RLC layer and functions of protocol layers below the RLC layer are disposed on the DU. In another design, functions of the CU or the DU may alternatively be obtained through division based on a service type or another system requirement. For example, division is performed based on a latency, a function whose processing time needs to satisfy a latency requirement is disposed on the DU, and a function whose processing time does not need to satisfy the latency requirement is disposed on the CU. In another design, the CU may alternatively have one or more functions of a core network. One or more CUs may be disposed together or disposed separately. For example, the CUs may be disposed on a network side for ease of centralized management. The DU may have a plurality of radio frequency functions, or the radio frequency functions may be disposed remotely.

A function of the CU may be implemented by one entity or different entities. For example, the function of the CU may be further divided, for example, separated into a control plane (control plane, CP) and a user plane (user plane, UP), namely, a control plane of the CU (CU-CP) and a user plane of the CU (CU-UP). For example, the CU-CP and the CU-UP may be implemented by different functional entities, and the CU-CP and the CU-UP may be coupled to the DU, to jointly implement a function of the base station. In a possible manner, the CU-CP is responsible for a control plane function, and mainly includes RRC and PDCP-C. The PDCP-C is mainly responsible for data encryption and decryption, integrity protection, data transmission, and the like on the control plane. The CU-UP is responsible for a user plane function, and mainly includes SDAP and PDCP-U. The SDAP is mainly responsible for processing data of the core network and mapping a data flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP indicates that the gNB is connected to the core network through an Ng interface, and the CU-CP is connected to the DU through F1-C (control plane). The CU-UP is connected to the DU through F1-U (user plane). Certainly, in another possible implementation, the PDCP-C is alternatively on the CU-UP.

It should be noted that a master base station and a secondary base station in multi-radio access technology dual connectivity (multi-RAT dual connectivity, MR-DC) may be of various forms and structures of the network device described above. Optionally, the master base station and the secondary base station may use a same CU but different DUs, or use a same DU but different CUs.

FIG. 2 is an example of a communication system according to an embodiment of this application. The communication system includes at least a first network device (gNB 1) and a second network device (gNB 2). For example, the first network device may be a base station in a split architecture. For example, the first network device may include one CU and at least one DU (only two DUs are shown in the figure). The second network device may be a base station in a split architecture. For example, the second network device may include one CU and at least one DU (only two DUs are shown in the figure). For example, the first network device (gNB 1) and the second network device (gNB 2) may be connected through an Xn interface.

The first network device and the second network device may be further connected to a core network. For example, the first network device is further connected to the core network through an NG interface, and the second network device is further connected to the core network through the NG interface.

In the communication system, a resource usage status may be exchanged between the first network device and the second network device, to optimize a network mobility parameter configuration, so as to implement mobility load balance (mobility load balance, MLB). For example, resources exchanged between the first network device and the second network device may include a transport network layer (transparent network layer, TNL) resource, a hardware usage resource, antenna load, and an overall resource status.

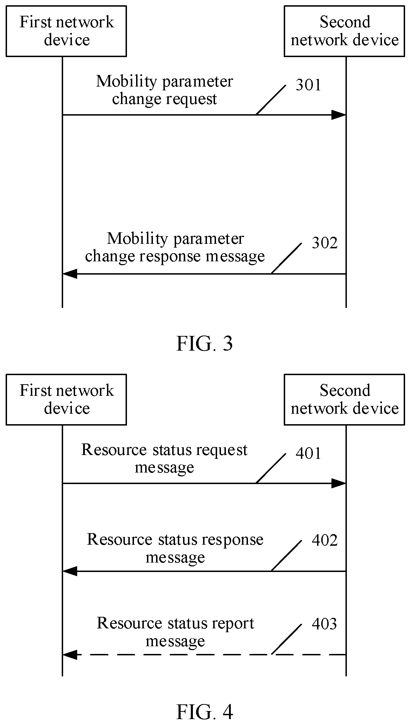

MLB means that a terminal device in an overloaded network device is handed over to a lightly loaded network device, to balance load between the network devices. For example, MLB may be implemented between network devices based on each interface, for example, an NG interface between an NG-RAN base station and a core network, an S1 interface between an LTE base station and a core network, an Xn interface between NR base stations, an X2 interface between LTE base stations, an F1 interface between a CU and a DU, and an E1 interface between a CU-CP and a CU-UP. For example, an MLB procedure may include a mobility parameter change (Mobility Settings Change) and resource status exchange. A procedure of the mobility parameter change is shown in FIG. 3. Steps in FIG. 3 are described below.

301: A first network device sends a mobility parameter change request, and correspondingly, a second network device receives the mobility parameter change request.

For example, the mobility parameter change request (Mobility Change Request) indicates the second network device to adjust a first handover trigger threshold, and the first handover trigger threshold is a threshold for handing over a terminal device in the second network device to the first network device. After receiving the mobility parameter change request, the second network device adjusts the first handover trigger threshold. For example, the second network device may increase the first handover trigger threshold, so that the terminal device in the second network device can camp on the second network device instead of being handed over to the first network device.

For example, the first network device may send the mobility parameter change request based on a resource usage status or a load status of the first network device. For example, when the first network device is in a heavy-load state or the second network device is in a light-load state, the first network device may send the mobility parameter change request to the second network device, to indicate the second network device to adjust the first handover trigger threshold, to enable the terminal device to camp on the second network device for a longer period of time, so as to reduce load of the first network device, and balance load between the first network device and the second network device.

In some implementations, the mobility parameter change request further includes a second handover trigger threshold, and the second handover trigger threshold is a threshold for handing over a terminal device in the first network device to the second network device. For example, when an available resource of the first network device is less than a first threshold, the first network device may decrease the second handover trigger threshold, so that the terminal device in the first network device can be handed over to the second network device, to reduce load of the first network device.

302: The second network device sends a mobility parameter change response message, and correspondingly, the first network device receives the mobility parameter change response message.

For example, the second network device may determine, based on a resource usage status of the second network device, whether to accept adjustment performed by the first network device on the first handover trigger threshold. When the second network device accepts the adjustment performed by the first network device on the first handover trigger threshold, the mobility parameter change response message may include a mobility change confirmation message (Mobility Change Acknowledge). When the second network device does not accept the adjustment performed by the first network device on the first handover trigger threshold, the mobility parameter change response message may include a mobility change failure message (Mobility Change failure). For example, the mobility change failure message may include a failure cause and an adjustment range of the first handover trigger threshold for the second network device.

It may be understood that the mobility parameter change request may be sent by the first network device based on a resource status exchange result. For example, the first network device may perform resource status exchange with the second network device, to determine the resource usage status of the second network device, so as to send the mobility parameter change request based on the resource usage status of the second network device. FIG. 4 is an interaction diagram of resource status exchange according to an embodiment of this application. Steps in FIG. 4 are described below.

401: A first network device sends a resource status request message, and correspondingly, a second network device receives the resource status request message.

For example, the resource status request (resource status request) message is used to request the second network device to feed back a measurement value of at least one resource parameter, to perform resource status exchange. For example, a Report Characteristics (Report Characteristics) information element in the resource status request message may carry indication information indicating the at least one resource parameter.

For example, the at least one resource parameter may be at a granularity of the network device, a cell, a beam, or a slice. To be specific, the first request message may be used to request to feed back a measurement value of at least one resource parameter of the entire second network device, or may be used to request to feed back a measurement value of at least one resource parameter in a cell (cell), a beam (for example, a synchronization signal/physical broadcast channel block (SS (Synchronization Signal)/PBCH Block, SSB)), or a slice (slice) of the second network device. For example, the resource status request message further includes information about the cell, the beam, or the slice corresponding to the at least one resource parameter.

For example, the first network device may send the resource status request message to the second network device when the first network device is in a heavy-load state.

402: The second network device sends a resource status response message, and correspondingly, the first network device receives the resource status response message.

For example, after receiving the resource status request message, the second network device may determine, based on an available resource of the second network device, whether the second network device can feed back the measurement value of the at least one resource parameter. When determining that the second network device can feed back the measurement value of the at least one resource parameter, the second network device sends the resource status response message to the first network device.

In step 402, the second network device sends the resource status response message, and the first network device receives the resource status response message, to complete initialization of resource status exchange between the first network device and the second network device. In some implementations, step 402 may be replaced with the following: The second network device sends a resource status failure message, and correspondingly, the first network device receives the resource status failure message. For example, after receiving the resource status request message, the second network device may determine, based on an available resource of the second network device, whether the second network device can feed back the measurement value of the at least one resource parameter. When determining that the second network device cannot feed back the measurement value of the at least one resource parameter, the second network device sends the resource status failure message to the first network device, to end resource status exchange.

In some implementations, the method shown in FIG. 4 includes step 403.

403: The second network device sends a resource status report message, and correspondingly, the first network device receives the resource status report message.

For example, the resource status report message may include the measurement value of the at least one resource parameter. After receiving the resource status request sent by the first network device, the second network device starts to measure the measurement value of the at least one resource parameter based on the resource status request, and feeds back the measurement value of the at least one resource parameter to the first network device via the resource status report message. For example, the resource status report message may be specifically a resource status update (resource status update) message.

For example, the resource status request includes periodicity information, and the periodicity information indicates a feedback periodicity for feeding back the measurement value of the at least one resource parameter by the second network device. For example, the periodicity information may be included in a Reporting Periodicity (Reporting Periodicity) information element of the resource status request message. The second network device may periodically measure the measurement value of the at least one resource parameter based on the periodicity information, and periodically feed back the measurement value of the at least one resource parameter to the first network device via the resource status report message.

For example, the at least one resource parameter may include at least one of an air interface resource (physical resource block, PRB) utilization rate, a transport network layer (transport network layer, TNL) resource utilization rate, an overall available resource (composite available capacity, CAC) utilization rate, an available capacity of a hardware resource (hardware capacity), a slice resource status (Slice Radio Resource Status, SRRS), a quantity of active UEs (number of active UEs), a quantity of RRC connections (RRC connections), and load sizes of different service types. The air interface resource utilization rate may include an uplink/downlink guaranteed bit rate (guaranteed bit rate, GBR)/non-guaranteed bit rate (Non-GBR) utilization rate. The transport network layer resource utilization rate may include an uplink/downlink TNL utilization rate (namely, an available uplink/downlink TNL percentage). The overall available resource utilization rate may include an available uplink/downlink capacity percentage, and the available capacity percentage may include an available percentage of a total capacity of a cell and an available percentage of each SSB capacity. A hardware resource utilization rate may include an available uplink/downlink capacity percentage. An available slice capacity may include an available capacity of each slice.

It may be understood that the at least one resource parameter is merely an example. The resource parameter in this application is not limited to the foregoing several examples, and may further include another new resource parameter that emerges with development of technologies. Therefore, the foregoing several resource parameters should not be understood as limitations on implementations of this application. It should be understood that the resource parameter in embodiments of this application may be a utilization rate of a resource corresponding to the resource parameter; or may be an available quantity of resources corresponding to the resource parameter. For example, the at least one resource parameter may include at least one of an available air interface resource quantity, an available TNL capacity, an available overall resource quantity, and the like.

When the first network device and the second network device perform resource status exchange, the first network device may send a resource status request to the second network device based on a load status of the first network device, where the resource status request is used to request the second network device to feed back a measurement value of at least one resource parameter. The first network device may determine, based on the measurement value that is of the at least one resource parameter and that is fed back by the second network device, whether to hand over a terminal device camping on the first network device to the second network device. For example, when the first network device determines, based on one or more measurement values, that an overall resource utilization rate of the second network device is low, the first network device determines to hand over the terminal device camping on the first network device to the second network device. When the first network device determines, based on the one or more measurement values, that the overall resource utilization rate of the second network device is high, it indicates that the second network device is in a heavy-load state. Therefore, the first network device determines not to hand over the terminal device camping on the first network device to the second network device.

In the method shown in FIG. 4, when the second network device can measure and feed back the at least one resource parameter, the first network device and the second network device can perform resource status exchange. When the second network device cannot feed back a measurement value of any one of the at least one resource parameter, the second network device sends a resource status failure message to the first network device, to end the resource status exchange. When the second network device cannot feed back measurement values of all resource parameters in the at least one resource parameter, the second network device does not feed back a measurement value that is of a resource parameter and that can be fed back by the second network device, but directly sends a resource status failure message to the first network device, to end the resource status exchange. As a result, the resource status exchange procedure is not flexible. In addition, the first network device cannot determine a resource usage status of the second network device based on the resource status failure message, and the first network device resends the resource status request to the second network device. Consequently, signaling overheads are high, and exchange efficiency is low. The first network device can resend the resource status request based only on a requirement of the first network device, and there is a risk that the second network device still cannot successfully feed back the measurement value of the resource parameter requested, via the resource status request, to be fed back.

In view of this, embodiments of this application provide a resource status exchange method and a communication apparatus, to improve efficiency of interaction between a first network device and a second network device. The resource status exchange method provided in embodiments of this application can be applied to the communication system shown in FIG. 2. Alternatively, the method can be applied to a first network device and a second network device, and the first network device and the second network device may be the network devices described above. It may be understood that the first network device and the second network device may be gNBs of independent architectures, or may be gNB-CUs in split architectures.

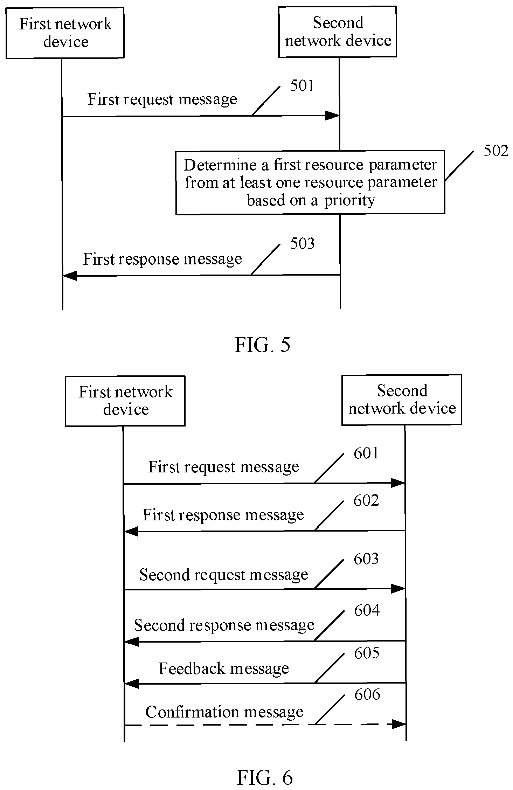

FIG. 5 is an interaction diagram of a resource status exchange method according to an embodiment of this application. As shown in FIG. 5, the method includes the following steps.

501: A first network device sends a first request message, and correspondingly, a second network device receives the first request message.

The first request message includes first indication information, the first indication information indicates a priority of at least one resource parameter, and the first request message is used to request to feed back a measurement value of the at least one resource parameter.

For example, the at least one resource parameter includes at least one of an air interface resource utilization rate, a transport network layer resource utilization rate, an overall available resource utilization rate, a quantity of active user equipments UEs, and a quantity of RRC connections. It may be understood that for description of the at least one resource parameter, refer to the foregoing description. Details are not described herein again. The measurement value of the at least one resource parameter is a result obtained by the second network device by measuring the at least one resource parameter. For example, the second network device measures a utilization rate of an air interface resource of the second network device, to obtain the utilization rate of the air interface resource: 60%, that is, a measurement value of the air interface resource: 60%. For example, the first request message may be a resource status request message sent by the first network device.

The first indication information indicates the second network device to measure the at least one resource parameter in a priority order of the at least one resource parameter. For example, the first indication information may include a plurality of bits, and every N bits of the plurality of bits indicate a priority of one of the at least one resource parameter, where N is a positive integer. For example, a value of the first N bits in the first indication information indicates a priority of a 1^{st} resource parameter in the at least one resource parameter. A mapping relationship between the value of the N bits and the priority may be as follows: A larger value of the N bits indicates a higher priority of the resource parameter; or a smaller value of the N bits indicates a higher priority of the resource parameter. It may be understood that the foregoing mapping relationship between the value of the N bits and the priority is merely an example, and should not constitute a limitation on this application. For example, the value of the N bits may not be in direct proportion or in inverse proportion to the priority, provided that values of the N bits corresponding to priorities at different levels are different. It may be understood that the mapping relationship between the value of the N bits and the priority may be configured by a network, or may be specified in a protocol.

For example, a value of N is related to a quantity of the at least one resource parameter. For example, when the at least one resource parameter includes five resource parameters, the value of N may be 3, to be specific, every three bits in the first indication information indicates a priority of one resource parameter. For example, the at least one resource parameter includes the air interface resource utilization rate, the transport network layer resource utilization rate, the overall available resource utilization rate, the quantity of active UEs, and the quantity of RRC connections, and the plurality of bits of the first indication information may be 101 100 011 010 001, where the first three bits 101 indicate a priority of the air interface resource utilization rate, the second three bits 100 indicate a priority of the transport network layer resource utilization rate, the third three bits 011 indicate the overall available resource utilization rate, the fourth three bits 010 indicate the quantity of active user equipments UEs, and the fifth three bits 001 indicate a priority of the quantity of RRC connections.

It may be understood that when the quantity of the at least one resource parameter is 1, the at least one resource parameter has no priority relationship. Therefore, the first request message may not include the first indication information.

For example, the first network device may determine the priority of the at least one resource parameter based on a resource usage status of the first network device. For example, the first network device may determine a priority of a corresponding resource parameter based on a resource utilization rate. For example, when an air interface resource utilization rate of the first network device is high, the first network device expects to hand over a terminal device that occupies a large quantity of air interface resources to the second network device. Therefore, the first network device may determine the air interface resource utilization rate as a high-priority resource parameter. For another example, when the first network device has a large quantity of terminal devices in an RRC connected mode, and an air interface resource utilization rate of the first network device is not high, the first network device expects to hand over a terminal device having an RRC connection to the second network device. Therefore, the first network device may determine a quantity of RRC connections as a high-priority resource parameter.

For example, the first request message further includes indication information indicating the at least one resource parameter. The indication information may include a first bitmap (bitmap), and a quantity of bits of the first bitmap may be greater than or equal to a quantity of resource parameters, where the first network device can request the second network device to feed back measurement values of the resource parameters. Each bit in the first bitmap indicates whether the first request message is used to request to feed back a resource parameter corresponding to the bit. For example, assuming that the first network device may request the second network device to feed back five resource parameters, including the air interface resource utilization rate, the transport network layer resource utilization rate, the overall available resource utilization rate, the quantity of active user equipments UEs, and the quantity of RRC connections, the first bitmap includes at least five bits, separately indicating whether the first request message is used to request to feed back measurement values of the foregoing five resource parameters. For example, if content of the first bitmap is 10010, it indicates that the first request message is used to request the second network device to feed back the air interface resource utilization rate and the quantity of active UEs.

For example, the first request message further includes a first feedback periodicity, and the first feedback periodicity indicates a feedback periodicity for feeding back the measurement value of the at least one resource parameter by the second network device, in other words, the first feedback periodicity is a feedback periodicity expected by the first network device for feeding back the measurement value of the at least one resource parameter by the second network device. For example, the first feedback periodicity may be 500 ms, 1000 ms, 2000 ms, 5000 ms, or 10000 ms, indicating that the second network device may feed back the measurement value of the at least one resource parameter every 500 ms, 1000 ms, 2000 ms, 5000 ms, or 10000 ms.

For example, the first request message further includes a cell list, and the cell list includes information about at least one cell. The at least one cell is a cell corresponding to the at least one resource parameter, to be specific, the first request message is used to request the second network device to feed back a measurement value of at least one resource parameter of the at least one cell.

For example, the first request message further includes a beam list, the beam list may include information about at least one beam, and the at least one beam is a beam corresponding to the at least one resource parameter, to be specific, the first request message is used to request the second network device to feed back a measurement value of at least one resource parameter of the at least one beam. For example, the beam list may include an SSB list.

For example, the first request message further includes a slice list, the slice list may include information about at least one slice, and the at least one slice is a slice corresponding to the at least one resource parameter, to be specific, the first request message is used to request the second network device to feed back a measurement value of at least one resource parameter of the at least one slice.

For example, the first request message further includes a message type. The message type may be an initial information type, indicating that the first request message is used to initialize resource status exchange between the first network device and the second network device.

For example, the first request message further includes an identifier of the first network device and an identifier of the second network device. The identifier of the first network device is allocated by the first network device, and the identifier of the second network device is allocated by the second network device.

For example, Table 1 is an example of the first request message provided in this embodiment of this application. An information element (information element, IE)/group name (Group Name) in Table 1 is a name of an information element or a name of a group IE in the first request message. Presence indicates whether the information element exists. Range indicates a range. IE type and reference indicates a type and reference of the IE. Semantics description indicates meaning description of the information element. Criticality indicates criticality. Assigned criticality indicates whether to enable the criticality. Presence being O (optional) indicates that the first request message may include a corresponding information element; or may not include a corresponding information element. Presence being M (mandatory) indicates mandatory, to be specific, the first request message needs to include a corresponding information element. Presence being C (Conditional) indicates conditional, to be specific, the first request message includes a corresponding information element when a condition is satisfied. If Criticality is yes (YES), each IE in the group IE is configured separately. Assigned criticality being reject (reject) indicates that when the second network device cannot interpret the information element, the second network device may directly reject the first request message. Assigned criticality being ignore (ignore) indicates that when the second network device cannot interpret the information element, the second network device may directly ignore the information element.

**Table 1**

| Information element (IE)/Group name (Group Name) | Presence (Presence ) | Range (Range) | IE type and reference (IE type and reference) | Semantics description (Semantics description) | Criticality (Criticality ) | Assigned criticality (Assigned Criticality) |
|---|---|---|---|---|---|---|
| Message Type (Message Type) | M | | 9.2.3.1 | | YES | reject |
| NG-RAN node1 Measurement ID (NG-RAN node1 Measurement ID) | M | | Integer type (INTEGER) (1..4095, ...) | Allocated by NG-RAN node1 (Allocated by NG-RAN node1) | YES | reject |
| NG-RAN node2 Measurement ID (NG-RAN node2 Measurement ID) | C-ifRegistr ationReq uestStop orAdd | | Integer type (1..4095, ...) | Allocated by NG-RAN node2 (Allocated by NG-RAN node2) | YES | ignore |
| Registration Request (Registration Request) | M | | Enumerated type (ENUMERATED) , for example, start (start), stop (stop), and add (add) | Type of request for which the resource status is required (Type of request for which the resource status is required.) | YES | reject |
| Report Characteristics (Report Characteristics) | C-ifRegistr ationReq uestStart | | Bitstring (BITSTRING) (size (32)) | Each bit indicates whether a corresponding resource parameter is requested to be fed back. A 1^{st} bit corresponds to a PRB utilization rate, a 2^{nd} bit corresponds to a transport network layer resource utilization rate, a 3^{rd} bit corresponds to an overall available resource utilization rate, a 4^{th} bit corresponds to a quantity of active UEs, and a 5^{th} bit corresponds to a quantity of RRC connections. Another bit may be ignored by NG-RAN node2. | YES | reject |
| Cell To Report List (Cell To Report List) | | 0..1 | | Cell ID list to which the request applies (Cell ID list to which the request applies) | YES | ignore |
| >Cell To Report | | 1.. | | | - | |
| Item (Cell To Report Item) | | <maxno ofCellsi nNG-RANno de> | | | | |
| >>Cell ID (Cell ID) | M | | Global NG-RAN Cell Identity (Global NG-RAN Cell Identity) 9.2.2.27 | | - | |
| >>SSB To Report List (SSB To Report List) | | 0..1 | | SSB list to which the request applies (SSB list to which the request applies.) | - | |
| >>>SSB To Report Item (SSB To Report Item) | | 1 .. < maxnoo fSSBAr eas> | | | - | |
| >>>>SSB-Index (SSB-Index) | M | | Integer type (0.., 63..) | | - | |
| >>Slice To Report List (Slice To Report List) | | 0..1 | | S-NSSAI list to which the request applies (S-NSSAI list to which the request applies.) | - | |
| Information element (IE)/Group name (Group Name) | Presence (Presence ) | Range (Range) | IE type and reference (IE type and reference) | Semantics description (Semantics description) | Criticality (Criticality ) | Assigned criticality (Assigned Criticality) |
| >>>Slice To Report Item (Slice To Report Item) | | 1 .. < maxnoo fBPLM Ns > | | | - | |
| >>>>PLNM Identity (PLMN Identity) | M | | 9.3.1.14 | Broadcast PLMN (Broadcast PLMN) | - | |
| >>>>S-NSSAI List (S-NSSAI List) | | 1 | | | - | |
| >>>>>S-NSSAI Item (S-NSSAI Item) | | 1 .. < maxnoo fSliceIt ems> | | | - | |
| >>>>>>S-NSSAI | M | | S-NSSAI 9.3.1.38 | | - | |
| Reporting Periodicity (Reporting Periodicity) | O | | Enumerated type (500 ms, 1000 ms, 2000 ms, 5000 ms, 10000 ms, ...) | A plurality of periodicities may be enumerated for feedback periodicities respectively for feeding back an air interface resource utilization rate, a transport network layer resource utilization rate, an overall available resource utilization rate, a quantity of active UEs, and a quantity of RRC connections; or this information element may indicate an average feedback periodicity of all the foregoing resource parameters. | YES | ignore |
| Characteristics priorities (Characteristics priorities) | O | | Bitstring (size (32)) | | | |

In Table 1, the first indication information may be included in the Characteristics priorities (Characteristics priorities) information element of the first request message. If Presence of the Characteristics priorities information element is O, it indicates that the Characteristics priorities information element may be included in the first request message, or may not be included in the first request message. For example, when the priority of the at least one resource parameter is the same, or the quantity of the at least one resource parameter is 1, the first request message may not include the Characteristics priorities information element. When the at least one resource parameter has different priorities, the first request message includes the Characteristics priorities information element. An information element type of the Characteristics priorities information element is a bitstring (BITSTRING) type and the Characteristics priorities information element may be 32 bits in size. The Characteristics priorities information element may indicate, by using 15 bits, priorities of the air interface resource utilization rate, the transport network layer resource utilization rate, the overall available resource utilization rate, the quantity of active UEs, and the quantity of RRC connections, to be specific, every three bits in the Characteristics priorities information element indicate a priority of a resource parameter, the first three bits indicate the priority of the air interface resource utilization rate, the second three bits indicate the priority of the transport network layer resource utilization rate, the third three bits indicate the priority of the overall available resource utilization rate, the fourth three bits indicate the priority of the quantity of active UEs, and the fifth three bits indicate the priority of the quantity of RRC connections.

The Message Type information element indicates a message type of the first request message. For example, the Message Type information element indicates that the first request message is initial information and is used to initialize the resource status exchange between the first network device and the second network device. The NG-RAN node1 Measurement ID (NG-RAN node1 Measurement ID) information element identifies the first network device. When the first request message indicates to stop feeding back the measurement value of the at least one resource parameter or add a feedback of a measurement value of a new resource parameter, the first request message may include the NG-RAN node2 Measurement ID (NG-RAN node2 Measurement ID) information element. The Registration Request (Registration Request) information element indicates a request type of the first request message, and the Registration Request IE may be of an enumerated type. For example, the Registration Request information element includes start, stop, or add, indicating that the first request message is used to request to start or stop feeding back the resource parameter of the at least one resource parameter, or add a feedback of a measurement value of a new resource parameter. The Report Characteristics (Report Characteristics) information element indicates at least one resource parameter whose measurement value is requested to be fed back, and the Report Characteristics information element may indicate the at least one resource parameter, by using a bitmap, each bit in the Report Characteristics information element indicates whether to request to feed back a measurement value of a corresponding resource parameter. For example, in the Report Characteristics information element, a 1^{st} bit indicates whether to request to feed back the air interface resource utilization rate, a 2^{nd} bit indicates whether to request to feed back the transport network layer resource utilization rate, a 3^{rd} bit indicates whether to request to feed back the overall available resource utilization rate, a 4^{th} bit indicates whether to request to feed back the quantity of active UEs, and a 5^{th} bit indicates whether to request to feed back the quantity of RRC connections. Another bit in the Report Characteristics information element may be ignored.

The Reporting Periodicity (Reporting Periodicity) information element indicates a feedback periodicity for feeding back the at least one resource parameter. For the Reporting Periodicity information element, at least one periodicity may be enumerated, indicating that the second network device may feed back the measurement value of the at least one resource parameter based on any one of the at least one periodicity. Alternatively, one of the at least one periodicity indicates a feedback periodicity of one of the at least one resource parameter.

The Cell To Report List information element may list at least one cell, of the at least one resource parameter, that needs to be fed back. The Cell To Report List information element includes a Cell To Report Item (Cell To Report Item) information element, and the Cell To Report Item information element may include at least one Cell ID (cell ID) information element. The Cell To Report Item information element indicates a quantity of the at least one Cell ID information element. For example, the quantity of Cell ID information elements may be greater than 1 and less than a maximum quantity of cells served by the second network device. Each Cell ID information element in the at least one Cell ID information element indicates a cell identifier of a cell, and the cell identifier may reference a cell global identity (Cell Global Identity). The Cell To Report Item information element further includes an SSB To Report List (SSB To Report List) information element, and the SSB To Report List information element indicates a list of SSBs requested to be fed back. The SSB To Report List information element includes an SSB To Report Item information element, which indicates a quantity of SSBs requested to be fed back. For example, the quantity of SSBs requested to be fed back is greater than 1 and less than a maximum quantity of SSBs in an area. The SSB To Report Item information element includes an SSB-Index information element, each SSB-Index information element indicates an index of an SSB, and the index of the SSB may range from 1 to 63. The SSB requested to be fed back is an SSB whose measurement value of at least one resource parameter is requested to be fed back.

The Cell To Report Item information element further includes a Slice To Report List (Slice To Report List) information element, and the Slice To Report List information element indicates a list of slices requested to be fed back. The Slice To Report List information element includes a Slice To Report Item information element, which indicates a quantity of slices requested to be fed back. For example, the quantity of slices requested to be fed back is greater than 1 and less than a maximum quantity of PLMNs. The Slice To Report Item information element includes a PLMN Identity information element, and each PLMN information element indicates a PLMN identity broadcast by the second network device. The Slice To Report Item information element includes a Single Network Slice Selection Assistance Information (Single Network Slice Selection Assistance Information, S-NSSAI) List information element, which indicates S-NSSAI of a slice that is requested to be fed back. The S-NSSAI List information element includes an S-NSSAI Item information element, and the S-NSSAI Item information element includes an S-NSSAI information element.

It may be understood that the information elements in the first request message shown in Table 1 are merely examples, and should not be understood as limitations on embodiments of this application.

In some implementations, the first indication information may be included in the Report Characteristics information element. The Report Characteristics information element may indicate the at least one resource parameter and the priority of the at least one resource parameter. For example, the Report Characteristics information element may include a plurality of bits, and every N bits in the plurality of bits indicate the at least one resource parameter and the priority of the at least one resource parameter. For example, assuming that resource parameters that the first network device may request the second network device to feed back include the air interface resource utilization rate, the transport network layer resource utilization rate, the overall available resource utilization rate, the quantity of active UEs, and the quantity of RRC connections, the Report Characteristics information element may include 15 bits, and every three bits indicate whether a resource parameter corresponding to the three bits needs to be fed back and indicate a priority of a resource parameter that needs to be fed back. For example, content of the plurality of bits of the Report Characteristics information element may include 101 000 000 010 000, where the first three bits 101 indicate that the air interface resource utilization rate and the priority of the air interface resource utilization rate need to be fed back, the second three bits 000 indicate that the transport network layer resource utilization rate does not need to be fed back, the third three bits 000 indicate that the overall available resource utilization rate does not need to be fed back, the fourth three bits 010 indicate that the quantity of active UEs and the priority of the quantity of active UEs need to be fed back, and the fifth three bits 000 indicate that the quantity of RRC connections does not need to be fed back. It may be understood that the foregoing five resource parameters and three bits are merely examples, and should not be understood as limitations on embodiments of this application. It may be understood that, in this implementation, the first indication information may be included in the Report Characteristics information element, and the Report Characteristics information element may indicate the at least one resource parameter and the priority of the at least one resource parameter. Therefore, the first request message may not include the Characteristics priorities information element, so that a quantity of information elements of the first request message is reduced, and resources needed for transmitting the first request message are saved.

In some implementations, the at least one resource parameter may be at a granularity of a cell, a beam, or a slice. In other words, the first request message may be used to request a measurement value of at least one resource parameter of a cell, a beam, or a slice of the second network device. The first request message may include information about the cell, the beam, or the slice corresponding to the at least one resource parameter, and the first indication information may indicate a priority of the at least one resource parameter of the cell, the beam, or the slice. For example, the first indication information may be included in the information about the cell, the beam, or the slice corresponding to the at least one resource parameter. For example, the first indication information may indicate a priority of at least one resource parameter in a cell requested to be fed back, and the cell requested to be fed back is a cell whose at least one resource parameter is requested to be fed back. The first request message includes cell information of the cell requested to be fed back, and the first indication information may be included in the cell information of the cell requested to be fed back.

In some implementations, the first request message further includes a first feedback periodicity, and the first feedback periodicity indicates a feedback periodicity for feeding back the measurement value of the at least one resource parameter by the second network device. In some implementations, the first feedback periodicity may include at least one feedback periodicity, and the plurality of feedback periodicities may indicate that the second network device may feed back the measurement value of the at least one resource parameter based on any one of the at least one feedback periodicity. The at least one feedback periodicity indicates a feedback periodicity of the at least one resource parameter, to be specific, one feedback periodicity of the at least one feedback periodicity indicates a feedback periodicity of one resource parameter of the at least one resource parameter.

For example, Table 2 is an example of the first request message provided in this embodiment of this application. The first request message includes a Cell ID information element, and one Cell ID information element indicates a cell global identity of a cell requested to be fed back. The Cell ID information element includes a Characteristics priorities (Characteristics priorities) information element, which indicates a priority of at least one resource parameter in a corresponding cell. The Cell ID information element further includes a Reporting Periodicity (Reporting Periodicity) information element, which indicates a feedback periodicity of the at least one resource parameter in the corresponding cell.

The first request message includes an SSB-Index (SSB-Index) information element, one SSB-Index information element indicates an index of one SSB requested to be fed back, and the SSB-Index information element includes a Characteristics priorities (Characteristics priorities) information element, which indicates a priority of at least one resource parameter in the corresponding SSB. The SSB-Index information element further includes a Reporting Periodicity (Reporting Periodicity) information element, which indicates a feedback periodicity of the at least one resource parameter in the corresponding SSB.

The first request message includes an S-NSSAI information element, one S-NSSAI information element indicates an identifier of a slice requested to be fed back, and the S-NSSAI information element includes a Characteristics priorities (Characteristics priorities) information element, which indicates a priority of at least one resource parameter in the corresponding slice. The S-NSSAI information element further includes a Reporting Periodicity (Reporting Periodicity) information element, which indicates a feedback periodicity of the at least one resource parameter in the corresponding slice.

It may be understood that for description of other information elements in Table 2, refer to the description of the information elements in Table 1. Details are not described herein again. The information elements in the first request message shown in Table 2 are merely examples, and should not be understood as limitations on embodiments of this application.

**Table 2**

| IE/Group name | Presence | Range | IE type and reference | Semantics description | Criticalit y | Assigned criticality |
|---|---|---|---|---|---|---|
| Message Type (Message Type) | M | | 9.2.3.1 | | YES | reject |
| NG-RAN node1 Measurement ID (NG-RAN node1 Measurement ID) | M | | Integer type (1..4095, .. .) | Allocated by NG-RAN node1 | YES | reject |
| NG-RAN node2 Measurement ID (NG-RAN node2 Measurement ID) | C-ifRegistra tionRequ estStopor Add | | Integer type (1..4095, .. .) | Allocated by NG-RAN node2 | YES | ignore |
| Registration Request (Registration Request) | M | | Enumerate d type | Type of request for which the | YES | reject |
| | | | (start, stop, and add) | resource status is required | | |
| Report Characteristics (Report Characteristics) | C-ifRegistra tionRequ estStart | | Bitstring (size (32)) | Each bit indicates whether a corresponding resource parameter is requested to be fed back. A 1^{st} bit corresponds to a PRB utilization rate, a 2^{nd} bit corresponds to a transport network layer resource utilization rate, a 3^{rd} bit corresponds to an overall available resource utilization rate, a 4^{th} bit corresponds to a quantity of active UEs, and a 5^{th} bit corresponds to a quantity of RRC connections. Another bit may be ignored by NG-RAN node2. | YES | reject |
| Cell To Report List (Cell To Report List) | | 0..1 | | Cell ID list to which the request applies | YES | ignore |
| >Cell To Report Item (Cell To Report Item) | | 1 to a maximum cell quantity of the second network device (1 .. <maxnoof CellsinNG RANnode >) | | | - | |
| >>Cell ID (Cell ID) | M | | Global NG-RAN Cell Identity (Global NG-RAN Cell Identity) | | | |
| >>>Characteristics priorities (Characteristics priorities) | O | | Bitstring (size (32)) | | | |
| >>>Reporting Periodicity (Reporting Periodicity) | O | | Enumerate d type (500 ms, 1000 ms, 2000 ms, 5000 ms, 10000 ms, ...) | | YES | ignore |
| >>SSB To Report List (SSB To Report List) | | 0..1 | | SSB list to which the request applies (SSB list to which the request applies.) | - | |
| >>>SSB To Report Item (SSB To Report Item) | | 1 .. < maxnoofS SBAreas> | | | - | |
| >>>>SSB-Index (SSB-Index) | M | | Integer type (0.., 63..) | | | |
| >>>>>Characteristics priorities (Characteristics priorities) | O | | Bitstring (size (32)) | | | |
| >>>>>Reporting Periodicity (Reporting Periodicity) | O | | Enumerate d type (500 ms, 1000 ms, 2000 ms, 5000 ms, 10000 ms, ...) | | YES | ignore |
| >>Slice To Report List (Slice To Report List) | | 0..1 | | S-NSSAI list to which the request applies (S-NSSAI list to which the request applies.) | - | |
| >>>Slice To Report Item (Slice To Report Item) | | 1 .. < maxnoofB PLMNs > | | | - | |
| >>>>PLMN Identity (PLMN Identity) | M | | 9.3.1.14 | Broadcast PLMN (Broadcast PLMN) | - | |
| >>>>S-NSSAI List (S-NSSAI List) | | 1 | | | - | |
| >>>>>S-NSSAI Item (S-NSSAI Item) | | 1 .. < maxnoofSl iceItems> | | | - | |
| >>>>>>S-NSSAI | M | | S-NSSAI 9.3.1.38 | | - | |
| >>>>>>>Characteristics priorities (Characteristics priorities) | O | | Bitstring (size (32)) | | | |
| >>>>>>>Reporting Periodicity (Reporting Periodicity) | O | | Enumerate d type (500 ms, 1000 ms, 2000 ms, 5000 ms, 10000 | | YES | ignore |
| | | | ms, ...) | | | |
| Reporting Periodicity (Reporting Periodicity) | O | | Enumerate d type (500 ms, 1000 ms, 2000 ms, 5000 ms, 10000 ms, ...) | A plurality of periodicities may be enumerated for feedback periodicities respectively for feeding back an air interface resource utilization rate, a transport network layer resource utilization rate, an overall available resource utilization rate, a quantity of active UEs, and a quantity of RRC connections; or this information element may indicate an average feedback periodicity of | YES | ignore |
| | | | | all the foregoing resource parameters. | | |

502: The second network device determines a first resource parameter from the at least one resource parameter based on the priority.

For example, the first resource parameter is a resource parameter whose measurement value can be fed back by the second network device. Alternatively, the first resource parameter is a resource parameter that has been measured by the second network device.

In an implementation, after receiving the first request message, the second network device may determine, based on the priority of the at least one resource parameter, a resource parameter that can be measured, that is, determine the first resource parameter. The second network device determines the first resource parameter, and measures a measurement value of the first resource parameter. For example, when the second network device cannot measure all resource parameters in the at least one resource parameter, the second network device preferentially measures a resource parameter with a higher priority in the at least one resource parameter. Therefore, the first resource parameter may be the resource parameter with the higher priority in the at least one resource parameter. It may be understood that the first resource parameter in this embodiment of this application may be one resource parameter, or may be a plurality of resource parameters. This is not limited in this application.

In another implementation, after receiving the first request message, the second network device may measure the at least one resource parameter in descending order of priorities, to determine the first resource parameter and obtain the first resource parameter.

In a possible implementation, that the second network device determines a first resource parameter from the at least one resource parameter based on the priority includes: The second network device determines the first resource parameter from the at least one resource parameter based on the priority and an available resource of the second network device.

For example, the second network device may determine, based on the priority of the at least one resource parameter and the available resource of the second network device, a resource parameter that can be measured (namely, the first resource parameter) in the at least one resource parameter. The second network device preferentially measures a resource parameter with a higher priority in the at least one resource parameter when the available resource allows, to determine the first resource parameter. For example, the second network device may measure the measurement value of the at least one resource parameter in descending order of the priorities, and the second network device may not measure a resource parameter whose measurement value cannot be measured because the available resource of the second network device is insufficient, to determine the first resource parameter. For example, when the available resource of the second network device is insufficient for measuring a resource parameter with the highest priority in the at least one resource parameter, but can measure a resource parameter with the second highest priority in the at least one resource parameter, the second network device may not measure a measurement value of the resource parameter with the highest priority, but measures the resource parameter with the second highest priority. Therefore, the first resource parameter does not include the resource parameter with the highest priority, but includes the resource parameter with the second highest priority. In this embodiment of this application, the second network device determines the first resource parameter based on the priority and the available resource of the second network device, and completes the measurement on the first resource parameter, so that the limited resource can be appropriately used.

503: The second network device sends a first response message, and correspondingly, the first network device receives the first response message.

The first response message includes the measurement value of the first resource parameter. For example, after measuring the first resource parameter, the second network device generates the first response message, and sends the first response message to the first network device.

For example, after receiving the first response message, the first network device may determine a resource usage status of the second network device based on the measurement value of the first resource parameter, to determine whether to hand over a terminal device in the first network device to the second network device.

In the method shown in FIG. 4, when the second network device cannot feed back the measurement values of all the resource parameters in the at least one resource parameter, the second network device sends the resource status failure message to the first network device, where the resource status failure message does not include the measurement value of the resource parameter that can be fed back by the second network device, the first network device cannot determine the resource usage status of the second network device based on the resource status failure message. As a result, the efficiency of the resource status exchange between the first network device and the second network device is low. However, in this embodiment of this application, the first request message includes the first indication information indicating the at least one resource parameter, to indicate the second network device to measure the at least one resource parameter in descending order of the priorities. It may be understood that a resource parameter with a higher priority in the at least one resource parameter is more important. The first resource parameter is a measured resource parameter in the at least one resource parameter. When the second network device cannot measure all the resource parameters in the at least one resource parameter, for example, when the available resource of the second network device is limited, the second network device preferentially measures a high-priority resource parameter, and feeds back a measurement value of the measured resource parameter in the first response message, to ensure that a measurement value of an important resource parameter can be fed back as much as possible in the first response message, so as to improve efficiency of resource status exchange between the first network device and the second network device, and improve flexibility of the resource status exchange between the first network device and the second network device.

To explain the first response message in more detail, this embodiment of this application further provides the following several cases:

Case 1: The second network device cannot feed back the measurement values of all the resource parameters in the at least one resource parameter.

In this case, the first response message may include the following several examples:
Example 1: The first response message further includes second indication information, and the second indication information indicates a resource parameter that has not been fed back or a resource parameter that has been fed back in the at least one resource parameter. In other words, the first response message may include the measurement value of the first resource parameter and the second indication information.

For example, the resource parameter that has not been fed back may be a resource parameter that cannot be measured by the second network device, for example, a resource parameter whose measurement value cannot be measured because the available resource of the second network device is insufficient. The resource parameter that has been fed back may be a resource parameter that has been measured by the second network device and whose measurement value is fed back by the second network device. It may be understood that the first response message includes a measurement value of the resource parameter that has been fed back. The resource parameter that has been fed back may include the first resource parameter.

The second indication information may be implemented in the following several manners:
Implementation 1: The second indication information may list, in an enumeration manner, the resource parameter that has not been fed back in the at least one resource parameter or list the resource parameter that has been fed back in the at least one resource parameter.
Implementation 2: The second indication information may include a second bitmap, and the second indication information indicates, by using the second bitmap, the resource parameter that has not been fed back and the resource parameter that has been fed back in the at least one resource parameter. A quantity of bits of the second bitmap may be greater than or equal to the quantity of the at least one resource parameter, and each bit in the second bitmap indicates whether a resource parameter corresponding to the bit is fed back. For example, if a value of one bit in the bitmap is 1, it indicates that a resource parameter corresponding to the bit has been fed back in the first response message; or if a value of the bit is 0, it indicates that a resource parameter corresponding to the bit has not been fed back in the first response message. For example, the at least one resource parameter may include five resource parameters: the air interface resource utilization rate, the transport network layer resource utilization rate, the overall available resource utilization rate, the quantity of active UEs, and the quantity of RRC connections. In this case, the second bitmap may include five bits, respectively indicating whether measurement values of the five resource parameters are fed back in the first response message. For example, if content of the second bitmap includes 10010, it indicates that the air interface resource utilization rate and the quantity of active UEs are fed back in the first response message.

For example, the first response message may be a resource status failure message, and the second network device sends the first response message to end the resource status exchange. The first response message may further include a failure cause.

For example, Table 3 is an example of the first response message provided in this embodiment of this application. As shown in Table 3, the second indication information may be included in an Unachievable Measurements (Unachievable Measurements) information element, the Unachievable Measurements information element indicates, by using a bitmap, the resource parameter that has been fed back and the resource parameter that has not been fed back in the at least one resource parameter. The first response message may include a Message Type (Message Type) information element, an NG-RAN node1 Measurement ID (NG-RAN node1 Measurement ID) information element, an NG-RAN node2 Measurement ID (NG-RAN node2 Measurement ID) information element, a Cause (cause) information element, and a Criticality Diagnostics (Criticality Diagnostics) information element. For example, for the Cause (cause) information element and the Criticality Diagnostics (Criticality Diagnostics) information element, refer to the protocol 3GPP TS 38.423 9.2.3.2 and 38.423 9.2.3.2.

**Table 3**

| IE/Group name | Presence | Range | IE type and reference | Semantics description | Criticality | Assigned criticality |
|---|---|---|---|---|---|---|
| Message Type (Message Type) | M | | 9.2.3.1 | | YES | reject |
| NG-RAN node1 Measurement ID (NG-RAN node1 Measurement ID) | M | | Integer type (1..4095, ...) | Allocated by NG-RAN node1 | YES | reject |
| NG-RAN node2 Measurement ID (NG-RAN node2 Measurement ID) | M | | Integer type (1..4095, ...) | Allocated by NG-RAN node2 | YES | reject |
| Cause (Cause) | M | | 9.2.3.2 | | YES | ignore |
| Criticality Diagnostics (Criticality Diagnostics) | O | | 9.2.3.3 | | YES | ignore |
| Unachievable Measurements (Unachievable Measurements) | O | | Bitstring (size (32)) | | | |

In this embodiment of this application, the second indication information indicates the resource parameter that has been fed back or the resource parameter that has not been fed back in the at least one resource parameter, so that the first network device can quickly obtain, based on the second indication information, the resource parameter that has been fed back or the resource parameter that has not been fed back, for the first network device to subsequently perform an operation based on the resource parameter that has been fed back or the resource parameter that has not been fed back.

In a possible implementation, when the second indication information indicates the resource parameter that has not been fed back, the first response message further includes first time information, and the first time information indicates an estimated feedback recovery time of the resource parameter that has not been fed back. In other words, the first response message may include the measurement value of the first resource parameter, the second indication information, and the first time information.

For example, the first time information may include at least one time, and the at least one time indicates a feedback recovery time of the resource parameter that has not been fed back. For example, each of the at least one time indicates an estimated feedback recovery time of one of resource parameters that have not been fed back. For example, there are five resource parameters that have not been fed back, the at least one time may include five times, and the five times respectively indicate estimated feedback recovery times of the corresponding resource parameters. In this embodiment of this application, the first response message may indicate, by using the first time information, the estimated feedback recovery time of the resource parameter that has not been fed back, so that the first network device requests again, after the estimated feedback recovery time, to feed back a measurement value of the resource parameter that has not been fed back. This reduces a possibility that the first network device fails to request again to feed back the measurement value of the resource parameter that has not been fed back. Therefore, interaction between the first network device and the second network device is more flexible.

In a possible implementation, when the second indication information indicates the resource parameter that has not been fed back, the second indication information further indicates a cell, a beam, or a slice corresponding to the resource parameter that has not been fed back; or when the second indication information indicates the resource parameter that has been fed back, the second indication information further indicates a cell, a beam, or a slice corresponding to the resource parameter that has been fed back.

For example, the first response message may include information about the cell, the beam, or the slice corresponding to the resource parameter that has not been fed back or the resource parameter that has been fed back. The second indication information may be included in the information about the cell, the beam, or the slice. For example, the second indication information is included in information about a cell that cannot be fed back, and the second indication information indicates a resource parameter that has been fed back or a resource parameter that has not been fed back in the cell that cannot be fed back, the cell that cannot be fed back is a cell whose all resource parameters in at least one resource parameter cannot be fed back in the first response message. For example, the at least one resource parameter may include an air interface resource utilization rate, a transport network layer resource utilization rate, an overall available resource utilization rate, a quantity of active UEs, and a quantity of RRC connections. In this case, the second bitmap in the second indication information may include five bits, respectively indicating whether measurement values of the five resource parameters in the cell that cannot be fed back have been fed back. Assuming that content of the second bitmap includes 10010, it indicates that the air interface resource utilization rate and the quantity of active UEs in the cell that cannot be fed back are fed back, and the transport network layer resource utilization rate, the overall available resource utilization rate, and the quantity of RRC connections in the cell that cannot be fed back are not fed back in the first response message.

For example, Table 4 is an example of the first response message provided in this embodiment of this application. The first response message may include a Cell Unable To Report List (Cell Unable To Report List) information element, and the Cell Unable To Report List information element may list a cell identifier of a cell that cannot be fed back. The Cell Unable To Report List information element includes a Cell Unable To Report Item (Cell Unable To Report Item) information element. The Cell Unable To Report Item information element may include a Cell ID (Cell ID) information element. One Cell ID information element indicates a cell identifier of a cell that cannot be fed back, the Cell ID information element may include an Unachievable Measurements (Unachievable Measurements) information element, and the Unachievable Measurements information element may indicate, by using a bitmap, a resource parameter that has been fed back and a resource parameter that has not been fed back in the cell. The Cell ID information element further includes a Suggested Reporting Periodicity (Suggested Reporting Periodicity) information element, and the Suggested Reporting Periodicity information element indicates a suggested feedback periodicity of at least one resource parameter in the cell. The Cell ID information element further includes an Acceptable Reporting Periodicity (Suggested Reporting Periodicity) information element, and the Acceptable Reporting Periodicity information element indicates an acceptable feedback periodicity of the at least one resource parameter in the cell. The Cell ID information element further includes an Acceptable Reporting Periodicity (Suggested Reporting Periodicity) information element, and the Acceptable Reporting Periodicity information element indicates an acceptable feedback periodicity of the at least one resource parameter in the cell. The Cell ID information element further includes an Estimated Time Return To Normal (Estimated Time Return To Normal) information element, and the Estimated Time Return To Normal information element indicates an estimated feedback recovery time of the resource parameter that has not been fed back in the cell. For the Estimated Time Return To Normal information element, at least one time may be enumerated, and each of the at least one time indicates an estimated feedback recovery time of one of resource parameters that have not been fed back.

The first response message may include an SSB Unable To Report List (SSB Unable To Report List) information element, and the SSB Unable To Report List information element may list an SSB that cannot be fed back. The SSB Unable To Report List information element includes an SSB Unable To Report Item (SSB Unable To Report Item) information element. The SSB Unable To Report Item information element may include an SSB-Index (SSB-Index) information element. One SSB-Index information element indicates an index of an SSB that cannot be fed back, the SSB-Index information element may include an Unachievable Measurements (Unachievable Measurements) information element, and the Unachievable Measurements information element may indicate, by using a bitmap, a resource parameter that has been fed back and a resource parameter that has not been fed back in the SSB. The SSB-Index information element further includes a Suggested Reporting Periodicity (Suggested Reporting Periodicity) information element, and the Suggested Reporting Periodicity information element indicates a suggested feedback periodicity of at least one resource parameter in the SSB. The SSB-Index information element further includes an Acceptable Reporting Periodicity (Suggested Reporting Periodicity) information element, and the Acceptable Reporting Periodicity information element indicates an acceptable feedback periodicity of the at least one resource parameter in the SSB. The SSB-Index information element further includes an Acceptable Reporting Periodicity (Suggested Reporting Periodicity) information element, and the Acceptable Reporting Periodicity information element indicates an acceptable feedback periodicity of the at least one resource parameter in the SSB. The SSB-Index information element further includes an Estimated Time Return To Normal (Estimated Time Return To Normal) information element, and the Estimated Time Return To Normal information element indicates an estimated feedback recovery time of the resource parameter that has not been fed back in the SSB. For the Estimated Time Return To Normal information element, at least one time may be enumerated, and each of the at least one time indicates an estimated feedback recovery time of one of resource parameters that have not been fed back.

The first response message may include a Slice Unable To Report List (Slice Unable To Report List) information element, and the Slice Unable To Report List information element may list a slice that cannot be fed back. The Slice Unable To Report List information element includes a Slice Unable To Report Item (Slice Unable To Report Item) information element, and the Slice Unable To Report Item information element may include a PLMN Identity (PLMN Identity) information element and an S-NSSAI List (S-NSSAI List) information element. The S-NSSAI List information element includes an S-NSSAI Item (S-NSSAI Item) information element, the S-NSSAI Item information element includes an S-NSSAI information element, and one S-NSSAI information element indicates S-NSSAI of a slice that cannot be fed back. The S-NSSAI information element includes an Unachievable Measurements (Unachievable Measurements) information element, and the Unachievable Measurements information element may indicate, by using a bitmap, a resource parameter that has been fed back and a resource parameter that has not been fed back in the slice. The S-NSSAI information element further includes a Suggested Reporting Periodicity (Suggested Reporting Periodicity) information element, and the Suggested Reporting Periodicity information element indicates a suggested feedback periodicity of at least one resource parameter in the slice. The S-NSSAI information element further includes an Acceptable Reporting Periodicity (Suggested Reporting Periodicity) information element, and the Acceptable Reporting Periodicity information element indicates an acceptable feedback periodicity of the at least one resource parameter in the slice. The S-NSSAI information element further includes an Acceptable Reporting Periodicity (Suggested Reporting Periodicity) information element, and the Acceptable Reporting Periodicity information element indicates an acceptable feedback periodicity of the at least one resource parameter in the slice. The S-NSSAI information element further includes an Estimated Time Return To Normal (Estimated Time Return To Normal) information element, and the Estimated Time Return To Normal information element indicates an estimated feedback recovery time of the resource parameter that has not been fed back in the slice. For the Estimated Time Return To Normal information element, at least one time may be enumerated, and each of the at least one time indicates an estimated recovery time of one of resource parameters that have not been fed back.

**Table 4**

| IE/Group name | Presence | Range | IE type and reference | Semantics description | Criticality | Assigned criticality |
|---|---|---|---|---|---|---|
| Cell Unable To Report List (Cell Unable To Report List) | | 0..1 | | Cell ID list to which the request is unable to apply (Cell ID list to which the request is unable to apply.) | YES | |
| >Cell Unable To Report Item (Cell Unable To Report Item) | | 1 .. <max noofC ellsin NG-RANn ode> | | | - | |
| >>Cell ID (Cell ID) | M | | Global NG-RAN Cell Identity (Global NG-RAN Cell Identity) 9.2.2.27 | | - | |
| >>>Unachievable Measurements (Unachievable Measurements) | O | | Bitstring (size (32)) | | | |
| >>>Suggested Reporting Periodicity (Suggested Reporting Periodicity) | O | | Enumerated type (500 ms, 1000 ms, 2000 ms, 5000 ms, 10000 ms, ...) | | | |
| >>>Acceptable Reporting Periodicity (Suggested Reporting Periodicity) | O | | Enumerated type (500 ms, 1000 ms, 2000 ms, 5000 ms, 10000 ms, ...) | | | |
| >>>Estimated Time Return To Normal (Estimated Time Return To Normal) | | | Enumerated type (500 ms, 1000 ms, 2000 ms, 5000 ms, 10000 | A plurality of times are enumerated, respectively indicating estimated | | |
| | | | ms, ...) | feedback recovery times of corresponding resource parameters. | | |
| >>SSB Unable To Report List (SSB Unable To Report List) | | 0..1 | | SSB list to which the request is unable to apply (SSB list to which the request is unable to apply) | - | |
| >>>SSB Unable To Report Item (SSB Unable To Report Item) | | 1 .. < maxn oofSS BArea s> | | | - | |
| >>>>SSB-Index (SSB-Index) | M | | Integer type (0.., 63..) | | - | |
| >>>>>Unachievable Measurements (Unachievable Measurements) | O | | Bitstring (size (32)) | | | |
| >>>>>Suggested Reporting Periodicity (Suggested Reporting Periodicity) | O | | Enumerated type (500 ms, 1000 ms, 2000 ms, 5000 ms, 10000 | | | |
| | | | ms, ...) | | | |
| >>>>>Acceptable Reporting Periodicity (Suggested Reporting Periodicity) | O | | Enumerated type (500 ms, 1000 ms, 2000 ms, 5000 ms, 10000 ms, ...) | | | |
| >>>>>Estimated Time Return To Normal (Estimated Time Return To Normal) | | | Enumerated type (500 ms, 1000 ms, 2000 ms, 5000 ms, 10000 ms, ...) | A plurality of times are enumerated, respectively indicating estimated feedback recovery times of corresponding resource parameters. | | |
| >>Slice Unable To Report List (Slice Unable To Report List) | | 0..1 | | S-NSSAI list to which the request is unable to apply (S-NSSAI list to which the request is unable to apply.) | - | |
| >>>Slice Unable To Report Item (Slice Unable To Report Item) | | 1 .. < maxn oofBP | | | - | |
| | | LMNs > | | | | |
| >>>>PLMN Identity (PLMN Identity) | M | | 9.3.1.14 | Broadcast PLMN | - | |
| >>>>S-NSSAI list (S-NSSAI List) | | 1 | | | - | |
| >>>>>S-NSSAI Item (S-NSSAI Item) | | 1 .. < maxn oofSli ceIte ms> | | | - | |
| >>>>>>S-NSSAI | M | | S-NSSAI 9.3.1.38 | | - | |
| >>>>>>>Unachievable Measurements (Unachievable Measurements) | O | | Bitstring (size (32)) | | | |
| >>>>>>>Suggested Reporting Periodicity (Suggested Reporting Periodicity) | O | | Enumerated type (500 ms, 1000 ms, 2000 ms, 5000 ms, 10000 ms, ...) | | | |
| >>>>>>>Acceptable Reporting Periodicity (Suggested Reporting Periodicity) | O | | Enumerated type (500 ms, 1000 ms, 2000 ms, 5000 ms, 10000 ms, ...) | | | |
| >>>>>>>Estimated Time | | | Enumerated | A plurality of | | |
| Return To Normal (Estimated Time Return To Normal) | | | type (500 ms, 1000 ms, 2000 ms, 5000 ms, 10000 ms, ...) | times are enumerated, respectively indicating estimated feedback recovery times of corresponding resource parameters. | | |

Example 2: The first response message further includes a second feedback periodicity, and the second feedback periodicity includes a feedback periodicity suggested by the second network device and/or a feedback periodicity acceptable to the second network device. In other words, the first response message may include the measurement value of the first resource parameter and the second feedback periodicity.

It may be understood that the first request message may further include the first feedback periodicity, the first feedback periodicity indicates the feedback periodicity for feeding back the measurement value of the at least one resource parameter by the second network device, and the feedback periodicity suggested by the second network device and/or the feedback periodicity acceptable to the second network device are/is determined based on the first feedback periodicity.

The feedback periodicity acceptable to the second network device is a feedback periodicity in which the measurement value of the at least one resource parameter can be fed back, and the feedback periodicity suggested by the second network device is a feedback periodicity suggested by the second network device for feeding back the measurement value of the at least one resource parameter. For example, for the second feedback periodicity, the feedback periodicity suggested by the second network device and/or the feedback periodicity acceptable to the second network device may be enumerated.

For example, when the second network device does not accept the first feedback periodicity, the second feedback periodicity may include the feedback periodicity acceptable to the second network device and/or the feedback periodicity suggested by the second network device. For example, when the second network device cannot feed back the measurement value of the at least one resource parameter based on the first feedback periodicity because the available resource is insufficient, the feedback periodicity acceptable to the second network device and/or the feedback periodicity suggested by the second network device is longer than the first feedback periodicity.

For example, when the second network device accepts the first feedback periodicity, the second feedback periodicity may include the feedback periodicity suggested by the second network device. For example, when the second network device can accept the first feedback periodicity and an overall resource utilization rate of the second network device is low, the feedback periodicity suggested by the second network device may be shorter than the first feedback periodicity. When the second network device can accept the first feedback periodicity and an overall resource utilization rate of the second network device is high, the feedback periodicity suggested by the second network device may be longer than the first feedback periodicity.

For example, Table 5 is an example of the first response message provided in this embodiment of this application. As shown in Table 5, the first response message includes a Suggested Reporting Periodicity (Suggested Reporting Periodicity) information element and an Acceptable Reporting Periodicity (Acceptable Reporting Periodicity) information element, where the Suggested Reporting Periodicity information element indicates the feedback periodicity suggested by the second network device, and the Acceptable Reporting Periodicity information element indicates the feedback periodicity acceptable to the second network device.

**Table 5**

| IE/Group name | Presence | Range | IE type and reference | Semantics description | Criticality | Assigned criticality |
|---|---|---|---|---|---|---|
| Suggested Reporting Periodicity (Suggested Reporting Periodicity) | O | | Enumerated type (500 ms, 1000 ms, 2000 ms, 5000 ms, 10000 ms, ...) | | | |
| Acceptable Reporting Periodicity (Acceptable Reporting Periodicity) | O | | Enumerated type (500 ms, 1000 ms, 2000 ms, 5000 ms, 10000 ms, ...) | | | |

In this embodiment of this application, the first response message may include the second feedback periodicity, which indicates the feedback periodicity acceptable to the second network device and/or the feedback periodicity suggested by the second network device, so that the first network device can adjust, based on the second feedback periodicity, the feedback periodicity for feeding back the measurement value of the at least one resource parameter. Therefore, interaction between the first network device and the second network device is more flexible.

Example 3: The first response message further includes second time information, and the second time information indicates a time interval between a moment at which the first network device receives the first response message and a moment at which the first network device sends a second request message. In other words, the first response message may include the measurement value of the first resource parameter and the second time information.

For example, the second request message is used to request to feed back a measurement value of one or more resource parameters. For example, the second request message may be a resource status request message reselected and sent by the first network device, in other words, the second request message and the first request message are resource status requests sent by the first network device at different moments.

For example, the second network device may determine the second time information based on a resource usage status or a load status of the second network device. For example, when an overall resource utilization rate of the second network device is high or the second network device is in a heavy-load state, the second time information may indicate that the time interval is greater than a first time threshold. When an overall resource utilization rate of the second network device is low or the second network device is in a light-load state, the second time information may indicate that the time interval is less than a second time threshold. It may be understood that the first time threshold and the second time threshold may be set by the second network device, and the first time threshold is greater than the second time threshold. For example, when the overall resource utilization rate of the second network device is high or the second network device is in the heavy-load state, the time interval may be 5000 ms, 10000 ms, or 15000 ms. When the overall resource utilization rate of the second network device is low or the second network device is in the light-load state, the time interval may be 1000 ms or 2000 ms. It may be understood that the time interval is merely an example, and should not constitute a limitation on this application.

For example, the first time information may be included in a Suggested Request Time Interval (Suggested Request Time Interval) information element of the first response message, and the Suggested Request Time Interval information element is shown in Table 6.

**Table 6**

| IE/Group name | Presence | Range | IE type and reference | Semantics description | Criticality | Assigned criticality |
|---|---|---|---|---|---|---|
| Suggested Request Time Interval (Suggested Request Time Interval) | | | Enumerated type (500 ms, 1000 ms, 2000 ms, 5000 ms, 10000 ms, ...) | | | |

In this embodiment of this application, when the overall resource utilization rate of the second network device is high or the second network device is in the heavy-load state, the second time information may indicate that the time interval is greater than the first time threshold. This reduces a risk that the second network device cannot feed back the measurement value of the one or more resource parameters because the available resource is insufficient or the second network device is overloaded, avoids signaling consumption caused because the first network device sends the request message for a plurality of times, and improves the resource status exchange efficiency. When the overall resource utilization rate of the second network device is low or the second network device is in the light-load state, the second time information may indicate that the time interval is less than the second time threshold, so that the resource of the second network device can be appropriately used, and interaction between the first network device and the second network device is more flexible.

Example 3: The first response message further includes third indication information, and the third indication information indicates a resource parameter that is in the first resource parameter and that is estimated to fail to be normally fed back subsequently, where the resource parameter that is estimated to fail to be normally fed back subsequently includes a resource parameter that has a feedback risk and/or a resource parameter that cannot be continuously fed back. In other words, the first response message includes the measurement value of the first resource parameter and the third indication information.

In this embodiment of this application, when the second network device cannot feed back the measurement values of all the resource parameters in the at least one resource parameter, the second network device may end the resource status exchange procedure with the first network device; or may continue to feed back a measurement value of a resource parameter that has been fed back in the at least one resource parameter. For example, the second network device may periodically feed back the measurement value of the first resource parameter in the at least one resource parameter as indicated by the first feedback periodicity in the first request message.

For example, the resource parameter that has the feedback risk is a resource parameter that may not be fed back in subsequent periodic feedbacks, and the resource parameter that cannot be continuously fed back is a resource parameter that cannot be fed back in subsequent periodic feedbacks.

For example, the second network device may determine, based on a resource usage status or a load status of the second network device, the foregoing resource parameter that is estimated to fail to be normally fed back subsequently. For example, when an overall resource utilization rate of the second network device continuously increases, the second network device may estimate an available resource of the second network device at a moment at which the measurement value of the first resource parameter is fed back next time, and determine, based on the available resource, the foregoing resource parameter that is estimated to fail to be normally fed back subsequently.

For example, the third indication information may include a third bitmap, a quantity of bits of the third bitmap may be greater than or equal to a quantity of first resource parameters, and each bit in the third bitmap indicates whether to feed back a resource parameter corresponding to the bit. For example, the first resource parameter may include an air interface resource utilization rate, a transport network layer resource utilization rate, an overall available resource utilization rate, a quantity of active UEs, and a quantity of RRC connections. In this case, the third bitmap may include five bits, respectively indicating whether the five resource parameters are estimated to be normally fed back subsequently. For example, if content of the second bitmap includes 10010, it indicates that the air interface resource utilization rate and the quantity of active UEs are estimated to fail to be normally fed back subsequently. In other words, the foregoing resource parameter that is estimated to fail to be normally fed back subsequently includes the air interface resource utilization rate and the quantity of active UEs.

It may be understood that, when the resource parameter that is estimated to fail to be normally fed back subsequently includes the resource parameter that has the feedback risk and/or the resource parameter that cannot be continuously fed back, the third indication information may further include a fourth bitmap. Each bit in the third bitmap indicates whether a corresponding resource parameter has a feedback risk, and each bit in the fourth bitmap indicates whether a corresponding resource parameter can be continuously fed back.

In this embodiment of this application, the first response message may include the third indication information indicating the resource parameter that is in the first resource parameter and that is estimated to fail to be normally fed back subsequently, so that the first network device can change, based on the third indication information, a resource parameter whose measurement value needs to be fed back. For example, the first network device may send a second request message, where the second request message is used to request a measurement value of one or more resource parameters, and the one or more resource parameters do not include the foregoing resource parameter that is estimated to fail to be normally fed back subsequently, so that a resource status exchange procedure between the first network device and the second network device is more flexible.

In a possible implementation, the first response message further includes third time information, and the third time information indicates a feedback failure time of the resource parameter that is estimated to fail to be normally fed back subsequently. In other words, the first response message includes the measurement value of the first resource parameter, the third indication information, and the third time information.

For example, the third time information may list, in an enumeration manner, a feedback failure time corresponding to each of resource parameters that are estimated to fail to be normally fed back subsequently. For example, the resource parameters that are estimated to fail to be normally fed back subsequently include three resource parameters, and the third time information may include three enumerated times, where the three times are respectively feedback failure times corresponding to the three resource parameters in the resource parameters that are estimated to fail to be normally fed back subsequently.

For example, when the resource parameter that is estimated to fail to be normally fed back subsequently includes the resource parameter that has the feedback risk, the feedback failure time includes a feedback risk existence time period of the resource parameter that has the feedback risk. For example, the feedback failure time may be 2000 ms, indicating that the resource parameter that has the feedback risk has the feedback risk within 2000 ms, and the resource parameter that has the feedback risk may not have the feedback risk after 2000 ms. When the resource parameter that is estimated to fail to be normally fed back subsequently includes the resource parameter that cannot be continuously fed back, the feedback failure time includes an unable to continuously feed back time period of the resource parameter that cannot be continuously fed back. For example, the feedback failure time may be 2000 ms, indicating that the resource parameter that cannot be continuously fed back cannot be continuously fed back within 2000 ms, and the resource parameter that cannot be continuously fed back can be continuously fed back after 2000 ms.

In this embodiment of this application, the first response message may include the feedback failure time of the resource parameter that is estimated to fail to be normally fed back subsequently, and may indicate the first network device to request again, after the feedback failure time, to feed back the resource parameter that is estimated to fail to be normally fed back subsequently, to improve the flexibility of the resource status exchange.

It may be understood that various examples of the first response message shown above may be combined with each other. For example, the first response message in Example 1 may be combined with the first response message in Example 2. To be specific, the first response message may include the measurement value of the first resource parameter, the second indication information, and the second feedback periodicity. Details are not described herein again.

Case 2: The second network device can feed back the measurement values of all the resource parameters in the at least one resource parameter.

In this case, the first response message may include the measurement value of the at least one resource parameter, to be specific, the first response message in step 503 may include the measurement value of the at least one resource parameter. The first response message may include the following several examples:

Example 1: The first response message further includes third indication information, and the third indication information indicates a resource parameter that is in the first resource parameter and that is estimated to fail to be normally fed back subsequently, where the resource parameter that is estimated to fail to be normally fed back subsequently includes a resource parameter that has a feedback risk and/or a resource parameter that cannot be continuously fed back. It may be understood that, that the third indication information indicates a resource parameter that is in the first resource parameter and that is estimated to fail to be normally fed back subsequently may be replaced with that the third indication information indicates a resource parameter that is in the at least one resource parameter and that is estimated to fail to be normally fed back subsequently. In other words, the first response message includes the measurement value of the at least one resource parameter and the third indication information.

It may be understood that for specific description of the third indication information, the resource parameter that is estimated to fail to be normally fed back subsequently, the resource parameter that has the feedback risk, and the resource parameter that cannot be continuously fed back, refer to the foregoing description. Details are not described herein again.

In a possible implementation, the first response message further includes third time information, and the third time information indicates a feedback failure time of the resource parameter that is estimated to fail to be normally fed back subsequently.

It may be understood that for specific description of the third time information, refer to the foregoing description. Details are not described herein again.

For example, Table 7 is an example of the first response message. The first response message includes a Characteristics Unable to Report Continuously (Characteristics Unable to Report Continuously) information element, and the Characteristics Unable to Report Continuously information element may indicate, by using a bitmap, the resource parameter that cannot be continuously fed back in the at least one resource parameter. The first response message may include an Unable to Report Time Interval (Unable to Report Time Interval) information element, which indicates an unable to continuously feed back time period of the resource parameter that cannot be continuously fed back. The first response message includes a Characteristics to Report Continuously in Risk (Characteristics to Report Continuously in Risk) information element, and the Characteristics to Report Continuously in Risk information element may indicate, by using a bitmap, the resource parameter that has the feedback risk in the at least one resource parameter. The first response message may include a Report Risk Time Interval (Report Risk Time Interval) information element, which indicates a feedback risk existence time period of the resource parameter that has the feedback risk.

**Table 7**

| IE/Group name | Presence | Range | IE type and reference | Semantics description | Criticality | Assigned criticality |
|---|---|---|---|---|---|---|
| Message Type (Message Type) | M | | 9.2.3.1 | | YES | reject |
| NG-RAN node1 Measurement ID (NG-RAN node1 Measurement ID) | M | | Integer type (1..4095, ...) | Allocated by NG-RAN node1 | YES | reject |
| NG-RAN node2 Measurement ID (NG-RAN node2 Measurement ID) | M | | Integer type (1..4095, ...) | Allocated by NG-RAN node2 | YES | reject |
| Criticality Diagnostics (Criticality Diagnostics) | O | | 9.2.3.3 | | YES | ignore |
| Characteristics | O | | Bitstring | | | |
| Unable to Report Continuously (Characteristics Unable to Report Continuously) | | | (size (32)) | | | |
| Unable to Report Time Interval (Unable to Report Time Interval) | | | Enumerated type (500 ms, 1000 ms, 2000 ms, 5000 ms, 10000 ms, ...) | | | |
| Characteristics to Report Continuously in Risk (Characteristics to Report Continuously in Risk) | O | | Bitstring (size (32)) | | | |
| Report Risk Time Interval (Report Risk Time Interval) | | | Enumerated type (500 ms, 1000 ms, 2000 ms, 5000 ms, 10000 ms, ...) | | | |

In some implementations, the third indication information further indicates a cell, an SSB, and a slice corresponding to the resource parameter that is estimated to fail to be normally fed back subsequently. The first response message may include information about the cell, the beam, or the slice corresponding to the resource parameter that is estimated to fail to be normally fed back subsequently. The third indication information may be included in the information about the cell, the beam, or the slice. For example, the second indication information is included in information about a cell that is estimated to fail to be normally fed back subsequently, the third indication information indicates a resource parameter that is estimated to fail to be normally fed back subsequently in the cell that is estimated to fail to be normally fed back subsequently, and the cell that is estimated to fail to be normally fed back subsequently is a cell for which the second network device estimates to fail to feed back all resource parameters in at least one resource parameter in the cell subsequently. For example, the at least one resource parameter may include an air interface resource utilization rate, a transport network layer resource utilization rate, an overall available resource utilization rate, a quantity of active UEs, and a quantity of RRC connections. In this case, a third bitmap in the third indication information may include five bits, respectively indicating whether measurement values of the five resource parameters in the cell that is estimated to fail to be normally fed back subsequently are estimated to be normally fed back subsequently. Assuming that content of the second bitmap includes 10010, it indicates that the air interface resource utilization rate and the quantity of active UEs in the cell that is estimated to fail to be normally fed back subsequently are estimated to fail to be normally fed back subsequently, and the transport network layer resource utilization rate, the overall available resource utilization rate, and the quantity of RRC connections in the cell that is estimated to fail to be normally fed back subsequently can be normally fed back subsequently.

For example, Table 8 is an example of the first response message provided in this embodiment of this application. The first response message may include a Cell Unable To Report Continuously List (Cell Unable To Report Continuously List) information element, and the Cell Unable To Report Continuously List information element may list a cell identifier of a cell that is estimated to fail to be normally fed back subsequently. The Cell Unable To Report Continuously List information element includes a Cell Unable To Report Continuously Item (Cell Unable To Report Continuously Item) information element. The Cell Unable To Report Continuously Item may include a Cell ID (Cell ID) information element. One Cell ID information element indicates a cell identifier of a cell that is estimated to fail to be normally fed back subsequently. The Cell ID information element may include a Characteristics Unable to Report Continuously (Characteristics Unable to Report Continuously) information element, and the Characteristics Unable to Report Continuously information element may indicate, by using a bitmap, a resource parameter that cannot be continuously fed back in the cell. The Cell ID information element further includes an Unable to Report Time Interval (Unable to Report Time Interval) information element, and the Unable to Report Time Interval information element indicates an unable to continuously feed back time period of the resource parameter that cannot be continuously fed back in the cell. The Cell ID information element may include a Characteristics to Report Continuously in Risk (Characteristics to Report Continuously in Risk) information element, and the Characteristics to Report Continuously in Risk information element may indicate, by using a bitmap, a resource parameter that has a feedback risk in the cell. The Cell ID information element further includes a Report Risk Time Interval (Report Risk Time Interval) information element, and the Report Risk Time Interval information element indicates a feedback risk existence time period of the resource parameter that has the feedback risk in the cell.

The first response message may include an SSB Unable To Report Continuously List (SSB Unable To Report Continuously List) information element, and the SSB Unable To Report Continuously List information element may list an SSB that is estimated to fail to be normally fed back subsequently. The SSB Unable To Report Continuously List includes an SSB Unable To Report Continuously Item (SSB Unable To Report Continuously Item) information element. The SSB Unable To Report Continuously Item information element may include an SSB-Index (SSB-Index) information element. One SSB-Index information element indicates an index of an SSB that is estimated to fail to be normally fed back subsequently. The SSB-Index information element may include a Characteristics Unable to Report Continuously (Characteristics Unable to Report Continuously) information element, and the Characteristics Unable to Report Continuously information element may indicate, by using a bitmap, a resource parameter that cannot be continuously fed back in the corresponding SSB. The SSB-Index information element further includes an Unable to Report Time Interval (Unable to Report Time Interval) information element, and the Unable to Report Time Interval information element indicates an unable to continuously feed back time period of the resource parameter that cannot be continuously fed back in the corresponding SSB. The SSB-Index information element may include a Characteristics to Report Continuously in Risk (Characteristics to Report Continuously in Risk) information element, and the Characteristics to Report Continuously in Risk information element may indicate, by using a bitmap, a resource parameter that has a feedback risk in the corresponding SSB. The SSB-Index information element further includes a Report Risk Time Interval (Report Risk Time Interval) information element, and the Report Risk Time Interval information element indicates a feedback risk existence time period of the resource parameter that has the feedback risk in the corresponding SSB.

The first response message may include a Slice Unable To Report Continuously List (Slice Unable To Report Continuously List) information element, and the Slice Unable To Report Continuously List information element may list a slice that is estimated to fail to be normally fed back subsequently. The Slice Unable To Report Continuously List information element includes a Slice Unable To Report Continuously Item (Slice Unable To Report Continuously Item) information element, and the Slice Unable To Report Continuously Item information element may include a PLMN Identity (PLMN Identity) information element and an S-NSSAI List (S-NSSAI List) information element. The S-NSSAI List information element includes an S-NSSAI Item (S-NSSAI Item) information element, the S-NSSAI Item information element includes an S-NSSAI information element, and one S-NSSAI information element indicates S-NSSAI of a slice that is estimated to fail to be normally fed back subsequently. The S-NSSAI information element includes a Characteristics Unable to Report Continuously (Characteristics Unable to Report Continuously) information element, and the Characteristics Unable to Report Continuously information element may indicate, by using a bitmap, a resource parameter that cannot be continuously fed back in the corresponding slice. The S-NSSAI information element further includes an Unable to Report Time Interval (Unable to Report Time Interval) information element, and the Unable to Report Time Interval information element indicates an unable to continuously feed back time period of the resource parameter that cannot be continuously fed back in the corresponding slice. The S-NSSAI information element may include a Characteristics to Report Continuously in Risk (Characteristics to Report Continuously in Risk) information element, and the Characteristics to Report Continuously in Risk information element may indicate, by using a bitmap, a resource parameter that has a feedback risk in the corresponding slice. The S-NSSAI index information element further includes a Report Risk Time Interval (Report Risk Time Interval) information element, and the Report Risk Time Interval information element indicates a feedback risk existence time period of the resource parameter that has the feedback risk in the corresponding slice.

**Table 8**

| IE/Group name | Presence | Range | IE type and reference | Semantics description | Criticality | Assigned criticality |
|---|---|---|---|---|---|---|
| Cell Unable To Report Continuously List (Cell Unable To Report Continuously List) | | 0..1 | | Cell ID list to which the report is unable to continuously applied (Cell ID list to which the report is unable to continuously applied.) | YES | |
| >Cell Unable To Report Continuously Item (Cell Unable To Report Continuously Item) | | 1 .. <maxn oofCell sinNG-RANno de> | | | - | |
| >>Cell ID (Cell ID) | M | | Global NG-RAN Cell Identity (Global NG-RAN Cell Identity) 9.2.2.27 | | - | |
| >>>Characteristics Unable to Report Continuously (Characteristics Unable to Report Continuously) | O | | Bitstring (size (32)) | | | |
| >>>Unable to Report Time Interval (Unable to Report Time Interval) | O | | Enumerated type (500 ms, 1000 ms, 2000 ms, 5000 ms, 10000 ms, ...) | This information element may be a single time period, indicating an unable to continuously feed back time period of each resource parameter in the cell; or a plurality of time periods may be enumerated, respectively indicating unable to continuously feed back time periods of corresponding resource parameters. | | |
| >>>Characteristics to Report Continuously in Risk (Characteristics to Report Continuously in Risk) | O | | Bitstring (size (32)) | | | |
| >>>Report Risk Time Interval (Report Risk Time Interval) | O | | Enumerated type (500 ms, 1000 ms, 2000 ms, 5000 ms, 10000 ms, ...) | This information element may be a single time period, indicating a feedback risk existence time period of each resource parameter in the cell; or a plurality of time periods may be enumerated, respectively indicating feedback risk existence time periods of corresponding resource parameters. | | |
| >>SSB Unable To Report Continuously List (SSB Unable To Report Continuously List) | | 0..1 | | List of SSBs estimated to fail to be normally fed back subsequently | - | |
| >>>SSB Unable To Report Continuously Item SSB Unable To Report Continuously Item (SSB Unable To Report Continuously Item) | | 1 .. < maxnoo fSSBAr eas> | | | - | |
| >>>>SSB-Index (SSB-Index) | M | | Integer type (0.., 63..) | | - | |
| >>>>>Characteristi cs Unable to Report Continuously (Characteristics Unable to Report Continuously) | O | | Bitstring (size (32)) | | | |
| >>>>>Unable to Report Time Interval (Unable to Report Time Interval) | O | | ENUMERATED (500 ms, 1000 ms, 2000 ms, 5000 ms, 10000 ms, ...) | This information element may be a single time period, indicating an unable to continuously feed back time period of each resource parameter in the SSB; or a plurality of time periods may be enumerated, respectively indicating unable to continuously feed back time periods of corresponding resource parameters. | | |
| >>>>>Characteristi cs to Report Continuously in Risk (Characteristics to Report Continuously in Risk) | O | | Bitstring (size (32)) | | | |
| >>>>>Report Risk Time Interval (Report Risk Time Interval) | O | | Enumerated type (500 ms, 1000 ms, 2000 ms, 5000 ms, 10000 ms, ...) | This information element may be a single time period, indicating a feedback risk existence time period of each resource parameter in the SSB; or a plurality of time periods may be enumerated, respectively indicating feedback risk existence time periods of corresponding resource parameters. | | |
| >>Slice Unable To Report Continuously List (Slice Unable To Report Continuously List) | | 0..1 | | S-NSSAI list of a slice estimated to fail to be normally fed back subsequently | - | |
| >>>Slice Unable To Report Continuously Item (Slice Unable To Report Continuously Item) | | 1 .. < maxnoo fBPLM Ns > | | | - | |
| >>>>PLMN Identity (PLMN Identity) | M | | 9.3.1.14 | Broadcast PLMN | - | |
| >>>>S-NSSAI List (S-NSSAI List) | | 1 | | | - | |
| >>>>>S-NSSAI Item (S-NSSAI Item) | | 1 .. < maxnoo fSliceIt ems> | | | - | |
| >>>>>>S-NSSAI | M | | S-NSSAI 9.3.1.38 | | - | |
| >>>>>>>Character istics Unable to Report Continuously (Characteristics Unable to Report Continuously) | O | | BITSTRING (SIZE(32)) | | | |
| >>>>>>>Unable to Report Time Interval (Unable to Report Time Interval) | O | | Enumerated type (500 ms, 1000 ms, 2000 ms, 5000 ms, 10000 ms, ...) | This information element may be a single time period, indicating an unable to continuously feed back time period of each resource parameter in the slice; or a plurality of time periods may be enumerated, respectively indicating unable to continuously feed back time periods of corresponding resource parameters. | | |
| >>>>>>>Character istics to Report Continuously in Risk (Characteristics to Report Continuously in Risk) | O | | Bitstring (size (32)) | | | |
| >>>>>>>Report Risk Time Interval (Report Risk Time Interval) | O | | Enumerated type (500 ms, 1000 ms, 2000 ms, 5000 ms, 10000 ms, ...) | This information element may be a single time period, indicating a feedback risk existence time period of each resource parameter in the slice; or a plurality of time periods may be enumerated, respectively indicating feedback risk existence time periods of corresponding resource parameters. | | |

Example 2: The first response message further includes a third feedback periodicity, and the third feedback periodicity indicates a feedback periodicity expected by the second network device for feeding back the measurement value of the at least one resource parameter. In other words, the first response message may include the measurement value of the at least one resource parameter and the third feedback periodicity.

It may be understood that the first request message further includes the first feedback periodicity, the first feedback periodicity indicates the feedback periodicity for feeding back the measurement value of the at least one resource parameter by the second network device, and the third feedback periodicity is determined by the second network device based on the first feedback periodicity.

For example, after receiving the first request message, the second network device may periodically feed back the measurement value of the at least one resource parameter to the first network device based on the first feedback periodicity. When the second network device expects to change the feedback periodicity for feeding back the measurement value of the at least one resource parameter, the second network device may include the third feedback periodicity in the first response message, to indicate the first network device to change the feedback periodicity for feeding back the measurement value of the at least one resource parameter.

For example, when a load status or a resource usage status of the second network device changes, the second network device may indicate, by using the third feedback periodicity, the first network device to change the feedback periodicity for feeding back the measurement value of the at least one resource parameter. The second network device may determine the third feedback periodicity based on the first feedback periodicity. For example, when load of the second network device decreases, or an overall resource utilization rate of the second network device decreases, the third feedback periodicity may be shorter than the first feedback periodicity. When load of the second network device increases, or an overall resource utilization rate of the second network device increases, the third feedback periodicity may be longer than the first feedback periodicity.

The first response message indicates, by using the third feedback periodicity, the first network device to change the feedback periodicity for feeding back the measurement value of the at least one resource parameter to the third feedback periodicity. In some implementations, the first response message may specifically indicate, by using the third feedback periodicity, a cell, an SSB, or a slice whose feedback periodicity is changed. For example, the first response message includes information about the cell, the SSB, or the slice whose feedback periodicity is changed, and the third feedback periodicity is included in the information about the cell, the SSB, or the slice whose feedback periodicity is changed.

For example, Table 9 is an example of the first response message. The first response message may include a Cell To Report With Periodicity Change List (Cell To Report With Periodicity Change List) information element, and the Cell To Report With Periodicity Change List information element may list a cell whose feedback periodicity is changed. The Cell To Report With Periodicity Change List information element includes a Cell To Report With Periodicity Change Item (Cell To Report With Periodicity Change Item) information element, and the Cell To Report With Periodicity Change Item information element may include a Cell ID (Cell ID) information element. One Cell ID information element indicates a cell identifier of a cell whose feedback periodicity is changed, the Cell ID information element may include a Characteristics To Report With Periodicity Change (Characteristics To Report With Periodicity Change) information element, and the Characteristics To Report With Periodicity Change information element may indicate, by using a bitmap, a resource parameter whose feedback periodicity needs to be changed in the corresponding cell. The Cell ID information element further includes an Expected Report Periodicity (Expected Report Periodicity) information element, and the Expected Report Periodicity information element indicates an expected feedback periodicity of the resource parameter whose feedback periodicity needs to be changed in the cell.

The first response message may include an SSB To Report With Periodicity Change List (SSB To Report With Periodicity Change List) information element, and the SSB To Report With Periodicity Change List information element may list an SSB whose feedback periodicity is changed. The SSB To Report With Periodicity Change List information element includes an SSB To Report With Periodicity Change Item (SSB To Report With Periodicity Change Item) information element, and the SSB To Report With Periodicity Change Item information element may include an SSB-Index (SSB-Index) information element. One SSB-Index information element indicates an index of an SSB whose feedback periodicity is changed, the SSB-Index information element may include a Characteristics To Report With Periodicity Change (Characteristics To Report With Periodicity Change) information element, and the Characteristics To Report With Periodicity Change information element may indicate, by using a bitmap, a resource parameter whose feedback periodicity needs to be changed in the corresponding SSB. The SSB-Index information element further includes an Expected Report Periodicity (Expected Report Periodicity) information element, and the Expected Report Periodicity information element indicates an expected feedback periodicity of the resource parameter whose feedback periodicity needs to be changed in the corresponding SSB.

The first response message may include a Slice To Report With Periodicity Change List (Slice To Report With Periodicity Change List) information element, and the Slice To Report With Periodicity Change List information element may list a slice whose feedback periodicity is changed. The Slice To Report With Periodicity Change List information element includes a Slice To Report With Periodicity Change Item (Slice To Report With Periodicity Change Item) information element, and the Slice To Report With Periodicity Change Item information element may include a PLMN Identity (PLMN Identity) information element and an S-NSSAI List (S-NSSAI List) information element. The S-NSSAI List information element includes an S-NSSAI Item (S-NSSAI Item) information element, the S-NSSAI Item information element includes an S-NSSAI information element, and one S-NSSAI information element indicates S-NSSAI of a slice whose feedback periodicity is changed. The S-NSSAI information element includes a Characteristics To Report With Periodicity Change (Characteristics To Report With Periodicity Change) information element, and the Characteristics To Report With Periodicity Change information element may indicate, by using a bitmap, a resource parameter whose feedback periodicity is changed in the corresponding slice. The S-NSSAI information element further includes an Expected Report Periodicity (Expected Report Periodicity) information element, and the Expected Report Periodicity information element indicates an expected feedback periodicity of the resource parameter whose feedback periodicity is changed in the corresponding slice.

**Table 9**

| IE/Group name | Presence | Range | IE type and reference | Semantics description | Criticality | Assigned criticality |
|---|---|---|---|---|---|---|
| Cell To Report With Periodicity Change List (Cell To Report With Periodicity Change List) | | 0..1 | | List of cell identifies of cells whose feedback periodicities are changed | YES | |
| >Cell To Report With Periodicity Change Item (Cell To Report With Periodicity Change Item) | | 1 .. <maxno ofCellsi nNG-RANno de> | | | - | |
| >>Cell ID (Cell ID) | M | | Global NG-RAN Cell Identity (Global NG-RAN Cell Identity) 9.2.2.27 | | - | |
| >>>Characteristics To Report With Periodicity Change (Characteristics To Report With Periodicity Change) | O | | Bitstring (size (32)) | | | |
| >>>Expected Report Periodicity (Expected Report Periodicity) | O | | Enumerated type (500 ms, 1000 ms, 2000 ms, 5000 ms, 10000 ms, ...) | This information element may be a single periodicity, indicating a feedback periodicity expected to be changed for each resource parameter in the cell; or a plurality of periodicities may be enumerated, respectively indicating feedback periodicities expected to be changed for corresponding resource parameters. | | |
| >>SSB To Report With Periodicity Change List (SSB To Report With Periodicity Change List) | | 0..1 | | List of SSBs whose feedback periodicities are changed | - | |
| >>>SSB To Report With Periodicity Change Item (SSB To Report With Periodicity Change Item) | | 1 .. < maxnoo fSSBAr eas> | | | - | |
| >>>>SSB-Index (SSB- | M | | Integer type (0..,63..) | | - | |
| >>>>>Characteristics To Report With Periodicity Change (Characteristics To Report With Periodicity Change) | O | | Bitstring (size (32)) | | | |
| >>>>>Expected Report Periodicity (Expected Report Periodicity) | O | | Enumerated type (500 ms, 1000 ms, 2000 ms, 5000 ms, 10000 ms, ...) | This information element may be a single periodicity, indicating a feedback periodicity expected to be changed for each resource parameter in the SSB; or a plurality of periodicities may be enumerated, respectively indicating feedback periodicities expected to be changed for corresponding resource parameters. | | |
| >>Slice To Report With Periodicity Change List (Slice To Report With Periodicity Change List) | | 0..1 | | S-NSSAI list of a slice whose feedback periodicity is changed | - | |
| >>>Slice To Report With Periodicity Change Item (Slice To Report With Periodicity Change Item) | | 1 .. < maxnoo fBPLM Ns > | | | - | |
| >>>>PLMN Identity (PLMN Identity) | M | | 9.3.1.14 | Broadcast PLMN | - | |
| >>>>S-NSSAI List (S-NSSAI List) | | 1 | | | - | |
| >>>>>S-NSSAI Item (S-NSSAI Item) | | 1 .. < maxnoo fSliceIt ems> | | | - | |
| >>>>>>S-NSSAI | M | | S-NSSAI 9.3.1.38 | | - | |
| >>>>>>>Characteristics To Report With Periodicity Change (Characteristics To Report With Periodicity Change) | O | | Bitstring (size (32)) | | | |
| >>>>>>>Expected Report Periodicity (Expected Report Periodicity) | O | | Enumerated type (500 ms, 1000 ms, 2000 ms, 5000 ms, 10000 ms, ...) | This information element may be a single periodicity, indicating a feedback periodicity expected to be changed for each resource parameter in the slice; or a plurality of periodicities may be enumerated, respectively indicating feedback periodicities expected to be changed for corresponding resource parameters. | | |

In some implementations, when the second network device needs to change the feedback periodicity for feeding back the measurement value of the at least one resource parameter to the third feedback periodicity, the third feedback periodicity may not be included in the first response message, and the third feedback periodicity may be included in any message sent by the second network device to the first network device. For example, when the load status or the resource usage status of the second network device changes and the feedback periodicity for feeding back the measurement value of the at least one resource parameter needs to be changed, the second network device may send a periodicity change message to the first network device, where the periodicity change message may include the third feedback periodicity.

In this embodiment of this application, when the load status or the resource usage status of the second network device changes, the second network device may indicate, by using the third feedback periodicity, the first network device to change the feedback periodicity for feeding back the at least one resource parameter, so that the resource of the second network device is appropriately used, and flexibility of interaction between the first network device and the second network device is improved.

In a possible implementation, when the first response message includes the third feedback periodicity, after receiving the first response message, the first network device sends a confirmation message to the second network device. Correspondingly, after sending the first response message, the second network device receives the confirmation message sent by the first network device. The confirmation message indicates that the first network device accepts the third feedback periodicity, or indicates that the first network device rejects the third feedback periodicity.

For example, when the first network device accepts the third feedback periodicity, the confirmation message indicates that the first network device accepts the third feedback periodicity. For example, the confirmation message may be an ACK (Acknowledgement) instruction. After receiving the confirmation message, the second network device may periodically feed back the measurement value of the at least one resource parameter based on the third feedback periodicity. For example, when the first network device does not accept the third feedback periodicity, the confirmation message indicates that the first network device rejects the third feedback periodicity. For example, the confirmation message may be a NACK (Negative Acknowledgement) instruction. After receiving the confirmation message, the second network device continues to periodically feed back the measurement value of the at least one resource parameter based on the first feedback periodicity. In this embodiment of this application, the second network device may change, through interaction, the feedback periodicity for feeding back the measurement value of the at least one resource parameter, so that the interaction between the second network device and the first network device is more flexible.

It may be understood that various examples of the first response message shown above may be combined with each other, and details are not described herein again.

FIG. 6 is an interaction diagram of another resource status exchange method according to an embodiment of this application. As shown in FIG. 6, the method includes the following steps.

601: A first network device sends a first request message, and correspondingly, a second network device receives the first request message.

For example, the first request message may be a resource status request sent by the first network device, to request the second network device to feed back a measurement value of at least one resource parameter, to perform resource status exchange.

For example, the first request message may include first indication information indicating a priority of the at least one resource parameter.

It may be understood that for specific description of the first request message, the at least one resource parameter, and the first indication information, refer to the foregoing related description. Details are not described herein again.

602: The second network device sends a first response message, and correspondingly, the first network device receives the first response message.

For example, when the second network device cannot feed back all resource parameters of the at least one resource parameter, the first response message may be a resource status failure message, and the second network device sends the first response message to end the resource status exchange. The first response message may include a measurement value of a first resource parameter, and the first resource parameter is a resource parameter that has been measured by the second network device and that is in the at least one resource parameter.

The first response message may further include second indication information, and the second indication information indicates a resource parameter that has not been fed back or a resource parameter that has been fed back in the at least one resource parameter. When the second indication information indicates the resource parameter that has not been fed back, the first response message further includes first time information, and the first time information indicates an estimated feedback recovery time of the resource parameter that has not been fed back.

The first response message may further include second time information, and the second time information indicates a time interval between a moment at which the first network device receives the first response message and a moment at which the first network device sends a second request message.

The first response message may further include third indication information, and the third indication information indicates a resource parameter that is in the first resource parameter and that is estimated to fail to be normally fed back subsequently, where the resource parameter that is estimated to fail to be normally fed back subsequently includes a resource parameter that has a feedback risk and/or a resource parameter that cannot be continuously fed back. The first response message further includes third time information, and the third time information indicates a feedback failure time of the resource parameter that is estimated to fail to be normally fed back subsequently.

It may be understood that for specific description of the first response message, the first resource parameter, the second indication information, the first time information, the second time information, the third indication information, and the third time information, refer to the foregoing related description. Details are not described herein again.

603: The first network device sends the second request message, and correspondingly, the second network device receives the second request message.

For example, the second request message may be a resource status request resent by the second network device, and is used to request the second network device to feed back a measurement value of one or more resource parameters. The second request message further includes indication information indicating a priority of the one or more resource parameters.

For example, the one or more resource parameters do not include the resource parameter that has not been fed back in the first response message.

For example, the first network device may determine a sending time point of the second request message based on the second time information.

604: The second network device sends a second response message, and correspondingly, the first network device receives the second response message.

When the second network device can feed back measurement values of all resource parameters in the one or more resource parameters, the second response message may be a resource status response message, to respond to the resource status request of the first network device and perform resource status exchange with the first network device. The first response message may include the measurement value of the one or more resource parameters.

For example, the first response message may further include indication information indicating a resource parameter that is in the one or more resource parameters and that is estimated to fail to be normally fed back subsequently. The resource parameter that is estimated to fail to be normally fed back subsequently includes a resource parameter that has a feedback risk and/or a resource parameter that cannot be continuously fed back. The first response message may further include indication information indicating an estimated feedback recovery time of the resource parameter that is estimated to fail to be normally fed back subsequently.

It may be understood that the second request message and the first request message may be resource status requests sent by the first network device at different moments. Therefore, for specific description of the second request message, refer to the foregoing description of the first request message. For example, for a signaling structure of the second request message, refer to the structure shown in Table 1 or Table 2. Details are not described herein again.

605: The second network device sends a feedback message, and correspondingly, the first network device receives the feedback message.

When the second network device can feed back the measurement values of all the resource parameters in the one or more resource parameters, the second network device periodically sends the feedback message as indicated by the second request message, to feed back the measurement value of the one or more resource parameters to the first network device. The feedback message may be a resource status update message.

For example, the one or more resource parameters may be at a granularity of a cell, a beam, or a slice. In other words, the second request message may be used to request a measurement value of one or more resource parameters of a cell, a beam, or a slice of the second network device, and the cell, the beam, or the slice may be referred to as a cell requested to be fed back, an SSB requested to be fed back, or a slice requested to be fed back. For example, the second request message may include a list of cells requested to be fed back, a list of SSBs requested to be fed back, or a list of slices requested to be fed back, and the second request message is used to request to feed back a measurement value of one or more resource parameters of each cell requested to be fed back in the list of cells requested to be fed back, a measurement value of one or more resource parameters of each SSB requested to be fed back in the list of SSBs requested to be fed back, or a measurement value of one or more resource parameters of each slice requested to be fed back in the list of slices requested to be fed back.

For example, the second request message may further include a fourth feedback periodicity, and the fourth feedback periodicity indicates a feedback periodicity corresponding to the cell requested to be fed back, the SSB requested to be fed back, or the slice requested to be fed back. It may be understood that feedback periodicities of the cells requested to be fed back in the list of cells requested to be fed back may be different, feedback periodicities of the SSBs requested to be fed back in the list of SSBs requested to be fed back may be different, and feedback periodicities of the slices requested to be fed back in the list of slices requested to be fed back may be different.

The feedback message sent by the second network device may be at a granularity of a cell, a beam, or a slice. To be specific, the feedback message may include a measurement value of one or more resource parameters of a cell requested to be fed back, an SSB requested to be fed back, or a slice requested to be fed back.

It may be understood that the feedback message may further include indication information indicating a resource parameter that is in the one or more resource parameters and that is estimated to fail to be normally fed back subsequently. The resource parameter that is estimated to fail to be normally fed back subsequently includes a resource parameter that has a feedback risk and/or a resource parameter that cannot be continuously fed back. The feedback message may further include indication information indicating an estimated feedback recovery time of the resource parameter that is estimated to fail to be normally fed back subsequently.

In some implementations, the feedback message may further include a fifth feedback periodicity, and the fifth feedback periodicity indicates the first network device to change a feedback periodicity for feeding back the measurement value of the one or more resource parameters. The fifth feedback periodicity may be determined based on the fourth feedback periodicity.

For example, the second network device may alternatively determine the fifth feedback periodicity based on a resource usage status or a load status of the second network device. For example, when load of the second network device decreases, or an overall resource utilization rate of the second network device decreases, the fifth feedback periodicity may be shorter than the fourth feedback periodicity. When load of the second network device increases, or the overall resource utilization rate of the second network device increases, the fifth feedback periodicity may be longer than the fourth feedback periodicity.

It may be understood that the feedback message may indicate, based on the fifth indication information, the first network device to change a feedback periodicity of a cell, an SSB, or a slice corresponding to the one or more resource parameters. For example, the feedback message is used to feed back a measurement value of one or more resource parameters of a first cell, the third feedback periodicity may indicate the first network device to change a feedback periodicity for feeding back the measurement value of the one or more resource parameters of the first cell, and the first cell is any one of cells requested, via the second request message, to be fed back.

In some implementations, the method in FIG. 6 further includes step 606.

Step 606: The first network device sends confirmation information, and correspondingly, the second network device receives the confirmation message.

When the feedback message includes the fifth feedback periodicity, the first network device sends the confirmation message to the second network device after receiving the feedback message. Correspondingly, after sending the feedback message, the second network device receives the confirmation message sent by the first network device. The confirmation message indicates that the first network device accepts the fifth feedback periodicity, or indicates that the first network device rejects the fifth feedback periodicity.

For example, when the first network device accepts the fifth feedback periodicity, the confirmation message indicates that the first network device accepts the fifth feedback periodicity. For example, the confirmation message may be an ACK (Acknowledgement) instruction. After receiving the confirmation message, the second network device may periodically feed back the measurement value of the one or more resource parameters based on the fifth feedback periodicity. For example, when the first network device does not accept the fifth feedback periodicity, the confirmation message indicates the first network device to reject the fifth feedback periodicity. For example, the confirmation message may be a NACK (Negative Acknowledgement) instruction. After receiving the confirmation message, the second network device continues to periodically feed back the measurement value of the one or more resource parameters based on the fourth feedback periodicity.

In this embodiment of this application, the first network device may send the first request message to the second network device, to request to feed back the measurement value of the at least one resource parameter. When the second network device cannot feed back the measurement values of all the resource parameters in the at least one resource parameter, via the first response message, the second network device may feed back a measurement value of a resource parameter that has been measured by the second network device and indicate the resource parameter that has not been fed back in the at least one resource parameter, so that the first network device can determine, based on the resource parameter that has not been fed back, the one or more resource parameters requested, via the second request message, to be fed back, for example, the one or more resource parameters do not include the resource parameter that has not been fed back. This can reduce a possibility that resource status exchange between the first network device and the second network device fails because the second network device cannot feed back the one or more resource parameters, and improve resource status exchange efficiency. The second network device may change the feedback periodicity of the measurement value of the one or more resource parameters based on the resource status exchange, so that the feedback periodicity conforms to the resource usage status or the load status of the second network device, and the resource status exchange between the first network device and the second network device is more flexible.

Communication apparatuses provided in embodiments of this application are described below.

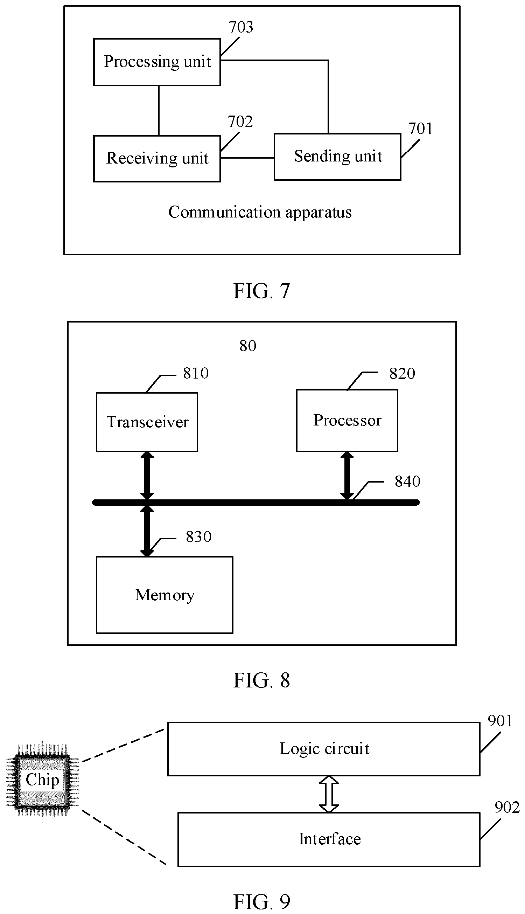

In this application, the communication apparatus is divided into functional modules based on the foregoing method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, module division is an example, and is merely a logical function division. In an actual implementation, another division manner may be used. The following describes in detail the communication apparatuses in embodiments of this application with reference to FIG. 7 to FIG. 9.

FIG. 7 is a diagram of a structure of a communication apparatus according to an embodiment of this application. As shown in FIG. 7, the communication apparatus includes a sending unit 701, a receiving unit 702, and a processing unit 703.

In some embodiments of this application, the communication apparatus may be the first network device (the first communication apparatus) shown above. To be specific, the communication apparatus shown in FIG. 7 may be configured to perform the step, function, or the like performed by the first network device in the foregoing method embodiments. For example, the first network device may be a beamforming transmit device, a chip, or the like. This is not limited in this embodiment of this application.

The sending unit 701 is configured to send a first request message to a second communication apparatus.

The receiving unit 702 is configured to receive a first response message from the second communication apparatus.

Optionally, the sending unit 701 is configured to send a confirmation message to the second communication apparatus.

It may be understood that for specific description of the first request message, the first response message, the confirmation message, and the like, refer to the method embodiments shown above, for example, the methods shown in FIG. 5 and FIG. 6; or refer to the related description of Table 1 to Table 9. Details are not described herein again.

It may be understood that specific description of the transceiver unit and the processing unit described in this embodiment of this application is merely examples. For specific functions, steps, or the like of the transceiver unit and the processing unit, refer to the foregoing method embodiments. Details are not described herein. For example, the sending unit 701 may be further configured to perform the sending step in step 501 shown in FIG. 5, and step 601, step 603, and step 606 shown in FIG. 6, and the receiving unit 702 is further configured to perform the receiving step in step 503 shown in FIG. 5, and step 602, step 604, and step 605 shown in FIG. 6.

FIG. 7 is reused. In some other embodiments of this application, the communication apparatus may be the second network device (second communication apparatus) shown above. To be specific, the communication apparatus shown in FIG. 7 may be configured to perform the step, function, or the like performed by the second network device in the foregoing method embodiments. For example, the second network device may be a beamforming receive device, a chip, or the like. This is not limited in this embodiment of this application.

The receiving unit 702 is configured to receive a first request message from a first communication apparatus, where the first request message is used to request to feed back a measurement value of at least one resource parameter.

The processing unit 703 is configured to determine a first resource parameter from the at least one resource parameter.

The sending unit 701 is configured to send a first response message to the first communication apparatus, where the first response message includes a measurement value of the first resource parameter.

Optionally, the receiving unit 702 is further configured to receive a confirmation message from the first communication apparatus.

It may be understood that for specific description of the first request message, the at least one resource parameter, the first resource parameter, the first response message, the confirmation message, and the like, refer to the method embodiments shown above, for example, the methods shown in FIG. 5 and FIG. 6; or refer to the related description of Table 1 to Table 9. Details are not described herein again.

It may be understood that specific description of the transceiver unit and the processing unit described in this embodiment of this application is merely examples. For specific functions, steps, or the like of the transceiver unit and the processing unit, refer to the foregoing method embodiments. Details are not described herein. For example, the receiving unit 702 may be further configured to perform the receiving step in step 501 shown in FIG. 5, and step 601, step 603, and step 606 shown in FIG. 6, and the sending unit 701 is further configured to perform the sending step in step 503 shown in FIG. 5, and step 602, step 604, and step 605 shown in FIG. 6.

The first network device and the second network device according to embodiments of this application are described above. The following describes possible product forms of the first network device and the second network device. It should be understood that a product in any form that has the function of the first network device in FIG. 7 or a product in any form that has the function of the second network device in FIG. 7 falls within the protection scope of embodiments of this application. It should be further understood that the following description is merely examples, and product forms of the first network device and the second network device in embodiments of this application are not limited thereto.

In the communication apparatus shown in FIG. 7, the processing unit 703 may be one or more processors, the sending unit 701 may be a transmitter, and the receiving unit 702 may be a receiver, or the sending unit 701 and the receiving unit 702 are integrated into one component, for example, a transceiver. Alternatively, the processing unit 703 may be one or more processors (or the processing unit 703 may be one or more logic circuits), the sending unit 701 may be an output interface, and the receiving unit 702 may be an input interface, or the sending unit 701 and the receiving unit 702 are integrated into one unit, for example, an input/output interface. Details are as follows.

In a possible implementation, in the communication apparatus shown in FIG. 7, the processing unit 703 may be one or more processors, and the sending unit 701 and the receiving unit 702 may be integrated into a transceiver. In embodiments of this application, the processor and the transceiver may be coupled, or the like. A manner of connecting the processor and the transceiver is not limited in embodiments of this application.

As shown in FIG. 8, a communication apparatus 80 includes one or more processors 820 and a transceiver 810.

For example, when the communication apparatus is configured to perform the step, method, or function performed by the first network device, the transceiver 810 is configured to: send a first request message to a second communication apparatus, and receive a first response message from the second communication apparatus. Optionally, the transceiver 810 is further configured to send a confirmation message to the second communication apparatus.

For example, when the communication apparatus is configured to perform the step, method, or function performed by the second network device, the transceiver 810 is configured to: receive a first request message from a first communication apparatus, and send a first response message to the first communication apparatus. Optionally, the processor 820 is configured to determine a first resource parameter and the like. Optionally, the transceiver 810 is further configured to receive a confirmation message from the first communication apparatus, and the like.

It may be understood that for specific description of the first request message, the first resource parameter, the first response message, the confirmation message, and the like, refer to the method embodiments shown above, for example, the methods shown in FIG. 5 and FIG. 6; or refer to the related description of Table 1 to Table 9. Details are not described herein again.

It may be understood that for specific description of the processor and the transceiver, refer to the description of the processing unit, the sending unit, and the receiving unit shown in FIG. 7. Details are not described herein again.

In various implementations of the communication apparatus shown in FIG. 8, the transceiver may include a receiver and a transmitter. The receiver is configured to perform a receiving function (or operation). The transmitter is configured to perform a transmitting function (or operation). In addition, the transceiver is configured to communicate with another device/apparatus through a transmission medium.

Optionally, the communication apparatus 80 may further include one or more memories 830, configured to store program instructions and/or data. The memory 830 is coupled to the processor 820. The coupling in embodiments of this application is indirect coupling or a communication connection between apparatuses, units, or modules, may be in an electrical form, a mechanical form, or another form, and is used for information exchange between the apparatuses, the units, or the modules. The processor 820 may cooperate with the memory 830. The processor 820 may execute the program instructions stored in the memory 830. Optionally, at least one of the one or more memories may be included in the processor.

In this embodiment of this application, a specific connection medium among the transceiver 810, the processor 820 and the memory 830 is not limited. In this embodiment of this application, in FIG. 8, the memory 830, the processor 820, and the transceiver 810 are connected to each other via a bus 840. The bus is represented via a thick line in FIG. 8. A manner of connection between other components is only schematically described, but is not used as a limitation. The bus may be classified into an address bus, a data bus, a control bus, and the like. For ease of representation, only one thick line is for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, or may be any conventional processor or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the communication apparatus shown in this application). However, this application is not limited thereto. The memory in embodiments of this application may alternatively be a circuit or any other apparatus that can implement a storage function, and is configured to store program instructions and/or data.

The processor 820 is mainly configured to: process a communication protocol and communication data, control the entire communication apparatus, execute a software program, and process data of the software program. The memory 830 is mainly configured to store the software program and the data. The transceiver 810 may include a control circuit and an antenna. The control circuit is mainly configured to perform conversion between a baseband signal and a radio frequency signal and process the radio frequency signal. The antenna is mainly configured to send and receive a radio frequency signal in a form of an electromagnetic wave. The input/output apparatus, for example, a touchscreen, a display screen, or a keyboard is mainly configured to: receive data entered by a user, and output data to the user.

After the communication apparatus is powered on, the processor 820 may read the software program in the memory 830, interpret and execute instructions of the software program, and process the data of the software program. When data needs to be sent in a wireless manner, the processor 820 performs baseband processing on the to-be-sent data, and then outputs a baseband signal to a radio frequency circuit. The radio frequency circuit performs radio frequency processing on the baseband signal, and then sends the radio frequency signal in an electromagnetic wave form through the antenna. When data is sent to the communication apparatus, the radio frequency circuit receives a radio frequency signal through the antenna, converts the radio frequency signal into a baseband signal, and outputs the baseband signal to the processor 820. The processor 820 converts the baseband signal into data, and processes the data.

In another implementation, the radio frequency circuit and the antenna may be disposed independent of the processor that performs baseband processing. For example, in a distributed scenario, the radio frequency circuit and the antenna may be remotely disposed independent of the communication apparatus.

It may be understood that the communication apparatus shown in embodiments of this application may further have more components than those in FIG. 8, or the like. This is not limited in embodiments of this application. The methods performed by the processor and the transceiver are merely examples. For specific steps performed by the processor and the transceiver, refer to the methods described above.

In another possible implementation, in the communication apparatus shown in FIG. 7, the processing unit 703 may be one or more logic circuits, the sending unit 701 may be an output interface, and the receiving unit 702 may be an input interface. Alternatively, the sending unit 701 and the receiving unit 702 may be integrated into one unit, for example, an input/output interface. The input/output interface is also referred to as a communication interface, an interface circuit, an interface, or the like. As shown in FIG. 9, a communication apparatus shown in FIG. 9 includes a logic circuit 901 and an interface 902. To be specific, the processing unit 703 may be implemented by using the logic circuit 901, and the sending unit 701 and the receiving unit 702 may be implemented by using the interface 902. The logic circuit 901 may be a chip, a processing circuit, an integrated circuit, a system on chip (system on chip, SoC), or the like. The interface 902 may be a communication interface, an input/output interface, a pin, or the like. For example, FIG. 9 shows an example in which the communication apparatus is a chip. The chip includes the logic circuit 901 and the interface 902.

In this embodiment of this application, the logic circuit and the interface may be coupled to each other. A specific manner of connection between the logic circuit and the interface is not limited in this embodiment of this application.

For example, when the communication apparatus is configured to perform the method, the function, or the step performed by the first network device, the interface 902 is configured to: output a first request message and input a first response message. Optionally, the interface 902 is further configured to output a confirmation message.

For example, when the communication apparatus is configured to perform the method, the function, or the step performed by the second network device, the interface 902 is configured to: input a first request message and output a first response message. Optionally, the logic circuit 901 is configured to determine a first resource parameter. Optionally, the interface 902 is further configured to input a confirmation message.

It may be understood that the communication apparatus shown in embodiments of this application may implement the method provided in embodiments of this application in a form of hardware, or may implement the method provided in embodiments of this application in a form of software. This is not limited in embodiments of this application.

It may be understood that for specific description of the first request message, the first response message, the first resource parameter, the confirmation message, and the like, refer to the method embodiments shown above, for example, the methods shown in FIG. 5 and FIG. 6; or refer to related description of Table 1 to Table 9. Details are not described herein again.

For specific implementations of the embodiment shown in FIG. 9, refer to the foregoing embodiments. Details are not described herein again.

An embodiment of this application further provides a wireless communication system. The wireless communication system includes a first communication apparatus and a second communication apparatus. The first communication apparatus and the second communication apparatus may be configured to perform the method in any one of embodiments (for example, FIG. 5 and FIG. 6).

In addition, this application further provides a computer program. The computer program is used to implement the operation and/or processing performed by the first network device in the methods provided in this application.

This application further provides a computer program. The computer program is used to implement the operation and/or the processing performed by the second network device in the method provided in this application.

This application further provides a computer-readable storage medium. The computer-readable storage medium stores computer code. When the computer code is run on a computer, the computer is enabled to perform the operation and/or the processing performed by the first network device in the method provided in this application.

This application further provides a computer-readable storage medium. The computer-readable storage medium stores computer code. When the computer code is run on a computer, the computer is enabled to perform the operation and/or the processing performed by the second network device in the method provided in this application.

This application further provides a computer program product. The computer program product includes computer code or a computer program. When the computer code or the computer program is run on a computer, the operation and/or the processing performed by the first network device in the method provided in this application are/is performed.

This application further provides a computer program product. The computer program product includes computer code or a computer program. When the computer code or the computer program is run on a computer, the operation and/or processing performed by the second network device in the method provided in this application are/is performed.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The units described as separate parts may or may not be physically separate, and parts displayed as units may or may not be physical units, in other words, may be located in one place, or may be distributed on a plurality of network units. Some or all of the units may be selected based on an actual requirement to implement the technical effect of the solutions provided in embodiments of this application.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for instructing a computer device (which may be a personal computer, a server, a network device, or the like) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing description is merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A resource status exchange method, comprising:
sending, by a first network device, a first request message to a second network device, wherein the first request message comprises first indication information, the first indication information indicates a priority of at least one resource parameter, and the first request message is used to request to feed back a measurement value of the at least one resource parameter; and
receiving, by the first network device, a first response message sent by the second network device, wherein the first response message comprises a measurement value of a first resource parameter in the at least one resource parameter.

2. A resource status exchange method, comprising:
receiving, by a second network device, a first request message sent by a first network device, wherein the first request message comprises first indication information, and the first indication information comprises a priority of at least one resource parameter;
determining, by the second network device, a first resource parameter from the at least one resource parameter based on the priority; and
sending, by the second network device, a first response message to the first network device, wherein the first response message comprises a measurement value of the first resource parameter.

3. The method according to claim 2, wherein the determining, by the second network device, a first resource parameter from the at least one resource parameter based on the priority comprises:
determining, by the second network device, the first resource parameter from the at least one resource parameter based on the priority and an available resource of the second network device.

4. The method according to any one of claims 1 to 3, wherein the first response message further comprises second indication information, and the second indication information indicates a resource parameter that has not been fed back or a resource parameter that has been fed back in the at least one resource parameter.

5. The method according to claim 4, wherein when the second indication information indicates the resource parameter that has not been fed back, the first response message further comprises first time information, and the first time information indicates an estimated feedback recovery time of the resource parameter that has not been fed back.

6. The method according to claim 4, wherein when the second indication information indicates the resource parameter that has not been fed back, the second indication information further indicates a cell, a beam, or a slice corresponding to the resource parameter that has not been fed back; or
when the second indication information indicates the resource parameter that has been fed back, the second indication information further indicates a cell, a beam, or a slice corresponding to the resource parameter that has been fed back.

7. The method according to any one of claims 1 to 6, wherein the first response message further comprises second time information, and the second time information indicates a time interval between a moment at which the first network device receives the first response message and a moment at which the first network device sends a second request message.

8. The method according to any one of claims 1 to 7, wherein the first response message further comprises third indication information, and the third indication information indicates a resource parameter that is in the first resource parameter and that is estimated to fail to be normally fed back subsequently, wherein the resource parameter that is estimated to fail to be normally fed back subsequently comprises a resource parameter that has a feedback risk and/or a resource parameter that cannot be continuously fed back.

9. The method according to claim 8, wherein the first response message further comprises third time information, and the third time information indicates a feedback failure time of the resource parameter that is estimated to fail to be normally fed back subsequently.

10. The method according to any one of claims 1 to 9, wherein the at least one resource parameter comprises at least one of an air interface resource utilization rate, a transport network layer resource utilization rate, an overall available resource utilization rate, a quantity of active user equipments UEs, and a quantity of radio resource control RRC connections.

11. The method according to any one of claims 1 to 10, wherein the first request message further comprises a first feedback periodicity, wherein the first feedback periodicity indicates a feedback periodicity for feeding back the measurement value of the at least one resource parameter by the second network device; and the first response message further comprises a second feedback periodicity, wherein the second feedback periodicity comprises a feedback periodicity suggested by the second network device and/or a feedback periodicity acceptable to the second network device, and the feedback periodicity suggested by the second network device and/or the feedback periodicity acceptable to the second network device are/is determined based on the first feedback periodicity.

12. The method according to claim 1, wherein the first request message further comprises a first feedback periodicity, wherein the first feedback periodicity indicates a feedback periodicity for feeding back the measurement value of the at least one resource parameter by the second network device; and the first response message further comprises a third feedback periodicity, wherein the third feedback periodicity is determined by the second network device based on the first feedback periodicity, and the third feedback periodicity indicates a feedback periodicity expected by the second network device for feeding back the measurement value of the at least one resource parameter.

13. The method according to claim 12, wherein the method further comprises:
sending, by the first network device, a confirmation message to the second network device after receiving the first response information, wherein the confirmation message indicates that the first network device accepts the third feedback periodicity, or indicates that the first network device rejects the third feedback periodicity.

14. The method according to claim 2, wherein the first request message further comprises a first feedback periodicity, wherein the first feedback periodicity indicates a feedback periodicity for feeding back the measurement value of the at least one resource parameter by the second network device; and the first response message further comprises a third feedback periodicity, wherein the third feedback periodicity is determined by the second network device based on the first feedback periodicity, and the third feedback periodicity indicates a feedback periodicity expected by the second network device for feeding back the measurement value of the at least one resource parameter.

15. The method according to claim 14, wherein the method further comprises:
after sending the first response information to the first network device, receiving, by the second network device, a confirmation message sent by the first network device, wherein the confirmation message indicates that the first network device accepts the third feedback periodicity, or indicates that the first network device rejects the third feedback periodicity.

16. A first communication apparatus, comprising:
a sending unit, configured to send a first request message to a second communication apparatus, wherein the first request message comprises first indication information, the first indication information indicates a priority of at least one resource parameter, and the first request message is used to request to feed back a measurement value of the at least one resource parameter; and
a receiving unit, configured to receive a first response message sent by the second communication apparatus, wherein the first response message comprises a measurement value of a first resource parameter in the at least one resource parameter.

17. A second communication apparatus, comprising:
a receiving unit, configured to receive a first request message sent by a first communication apparatus, wherein the first request message comprises first indication information, and the first indication information comprises a priority of at least one resource parameter;
a processing unit, configured to determine a first resource parameter from the at least one resource parameter based on the priority; and
a sending unit, configured to send a first response message to the first communication apparatus, wherein the first response message comprises a measurement value of the first resource parameter.

18. The apparatus according to claim 17, wherein the processing unit is specifically configured to determine the first resource parameter from the at least one resource parameter based on the priority and an available resource of the second communication apparatus.

19. The apparatus according to any one of claims 16 to 18, wherein the first response message further comprises second indication information, and the second indication information indicates a resource parameter that has not been fed back or a resource parameter that has been fed back in the at least one resource parameter.

20. The apparatus according to claim 19, wherein when the second indication information indicates the resource parameter that has not been fed back, the first response message further comprises first time information, and the first time information indicates an estimated feedback recovery time of the resource parameter that has not been fed back.

21. The apparatus according to claim 19, wherein when the second indication information indicates the resource parameter that has not been fed back, the second indication information further indicates a cell, a beam, or a slice corresponding to the resource parameter that has not been fed back; or
when the second indication information indicates the resource parameter that has been fed back, the second indication information further indicates a cell, a beam, or a slice corresponding to the resource parameter that has been fed back.

22. The apparatus according to any one of claims 16 to 21, wherein the first response message further comprises second time information, and the second time information indicates a time interval between a moment at which the first network device receives the first response message and a moment at which the first network device sends a second request message.

23. The apparatus according to any one of claims 16 to 22, wherein the first response message further comprises third indication information, and the third indication information indicates a resource parameter that is in the first resource parameter and that is estimated to fail to be normally fed back subsequently, wherein the resource parameter that is estimated to fail to be normally fed back subsequently comprises a resource parameter that has a feedback risk and/or a resource parameter that cannot be continuously fed back.

24. The apparatus according to claim 23, wherein the first response message further comprises third time information, and the third time information indicates a feedback failure time of the resource parameter that is estimated to fail to be normally fed back subsequently.

25. The apparatus according to any one of claims 16 to 24, wherein the at least one resource parameter comprises at least one of an air interface resource utilization rate, a transport network layer resource utilization rate, an overall available resource utilization rate, a quantity of active user equipments UEs, and a quantity of radio resource control RRC connections.

26. The apparatus according to any one of claims 16 to 25, wherein the first request message further comprises a first feedback periodicity, wherein the first feedback periodicity indicates a feedback periodicity for feeding back the measurement value of the at least one resource parameter by the second network device; and the first response message further comprises a second feedback periodicity, wherein the second feedback periodicity comprises a feedback periodicity suggested by the second network device and/or a feedback periodicity acceptable to the second network device, and the feedback periodicity suggested by the second network device and/or the feedback periodicity acceptable to the second network device are/is determined based on the first feedback periodicity.

27. The apparatus according to claim 16, wherein the first request message further comprises a first feedback periodicity, wherein the first feedback periodicity indicates a feedback periodicity for feeding back the measurement value of the at least one resource parameter by the second network device; and the first response message further comprises a third feedback periodicity, wherein the third feedback periodicity is determined by the second network device based on the first feedback periodicity, and the third feedback periodicity indicates a feedback periodicity expected by the second network device for feeding back the measurement value of the at least one resource parameter.

28. The apparatus according to claim 27, wherein the sending unit is further configured to send a confirmation message to the second communication apparatus, wherein the confirmation message indicates that the first communication apparatus accepts the third feedback periodicity, or indicates that the first communication apparatus rejects the third feedback periodicity.

29. The apparatus according to claim 17, wherein the first request message further comprises a first feedback periodicity, wherein the first feedback periodicity indicates a feedback periodicity for feeding back the measurement value of the at least one resource parameter by the second network device; and the first response message further comprises a third feedback periodicity, wherein the third feedback periodicity is determined by the second network device based on the first feedback periodicity, and the third feedback periodicity indicates a feedback periodicity expected by the second network device for feeding back the measurement value of the at least one resource parameter.

30. The apparatus according to claim 29, wherein the receiving unit is further configured to receive a confirmation message sent by the first communication apparatus, wherein the confirmation message indicates that the first communication apparatus accepts the third feedback periodicity, or indicates that the first communication apparatus rejects the third feedback periodicity.

31. A communication apparatus, comprising a processor and a memory, wherein
the memory is configured to store instructions; and
the processor is configured to execute the instructions, to perform the method according to any one of claims 1 to 15.

32. A computer-readable storage medium, wherein the computer-readable storage medium is configured to store a computer program; and when the computer program is executed, the method according to any one of claims 1 to 15 is performed.
